(19) **Europäisches Patentamt / European Patent Office / Office européen des brevets**

(11) **EP 4 671 990 A1**

(12) # EUROPEAN PATENT APPLICATION

(43) Date of publication:
31.12.2025 Bulletin 2026/01

(21) Application number: 25178581.2

(22) Date of filing: 23.05.2025

(51) International Patent Classification (IPC):
**G06F 9/50** (2006.01)

(52) Cooperative Patent Classification (CPC):
**G06F 9/522; G06N 3/04; G06N 3/063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 27.06.2024 US 202418756006

(71) Applicant: INTEL Corporation
Santa Clara, CA 95054 (US)

(72) Inventors:
• VASUKI, Srikanth
Castleknock (IE)
• HANRAHAN, Niall
Galway (IE)

(74) Representative: **Rummler, Felix et al**
**Maucher Jenkins**
**Seventh Floor Offices**
**Artillery House**
**11-19 Artillery Row**
**London SW1P 1RT (GB)**

(54) **GRAPH ORCHESTRATOR FOR NEURAL NETWORK EXECUTION**

(57) A barrier may be inserted into a graph representing workloads in an execution of a neural network and placed between a producing workload performed by a producer and a consuming workload performed by a consumer. The consuming workload is to be performed using data generated from the producing workload. A graph orchestrator may modify status information of the barrier in response to receiving a message from the producer. The status information indicates whether one or more producing workloads associated with the barrier are complete. The message indicates that the producing workload is complete. The graph orchestrator may determine whether the one or more producing workloads are complete based on the modified status information. In response to determining that the one or more producing workloads are complete, the graph orchestrator may provide a barrier lift message to the consumer. The barrier lift message causing the consumer to start the consuming workload.

FIG. 1

EP 4 671 990 A1

## Description

<u>Technical Field</u>

This disclosure relates generally to neural networks (also referred to as "deep neural networks" or "DNN"), and more specifically, graph orchestrator for DNN execution.

<u>Background</u>

DNNs are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as there can be a large number of operations as well as a large amount of data to read, process, and write. Therefore, techniques to improve efficiency of DNNs are needed.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example graph representing workloads in DNN execution, in accordance with various embodiments.
FIG. 2 illustrates an example graph with barriers, in accordance with various embodiments.
FIG. 3 illustrates an example graph orchestrator block, in accordance with various embodiments.
FIGS. 4A and 4B illustrate barrier tracking facilitated by a graph orchestrator, in accordance with various embodiments.
FIG. 5 illustrates a linked list of workloads of a compute element, in accordance with various embodiments.
FIG. 6 illustrates a graph orchestrator producer flow, in accordance with various embodiments.
FIG. 7 illustrates a graph orchestrator consumer flow, in accordance with various embodiments.
FIG. 8 illustrates a compute element barrier updating flow, in accordance with various embodiments.
FIG. 9 illustrates a compute element barrier processing flow, in accordance with various embodiments.
FIG. 10 illustrates direct memory access (DMA) workloads to program a barrier memory, in accordance with various embodiments.
FIG. 11 illustrates an example convolutional neural network (CNN), in accordance with various embodiments.

FIG. 12 illustrates an example transformer model, in accordance with various embodiments.
FIG. 13 is a block diagram of a DNN system, in accordance with various embodiments.
FIG. 14 is a block diagram of a DNN module, in accordance with various embodiments.
FIG. 15 is a flowchart of a method for executing a DNN, in accordance with various embodiments.
FIG. 16 is a block diagram of an example computing device, in accordance with various embodiments.

<u>Detailed Description</u>

The last decade has witnessed a rapid rise in artificial intelligence (AI) based data processing, particularly based on DNNs. DNNs are widely used in the domains of computer vision, speech recognition, image, and video processing mainly due to their ability to achieve beyond human-level accuracy. A DNN typically includes a sequence of layers. A DNN layer may include one or more deep learning operations (also referred to as "neural network operations"), such as convolution, matrix multiplication, layer normalization, batch normalization, SoftMax operation, pooling, elementwise operation, linear operation, nonlinear operation, and so on.

Input or output data of deep learning operations may be arranged in data structures called tensors. A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher dimensional tensors. A dimension of a tensor may correspond to an axis, e.g., an axis in a coordinate system. A dimension may be measured by the number of data points along the axis. The dimensions of a tensor may define the shape of the tensor. A DNN layer may receive one or more input tensors and compute an output tensor from the one or more input tensors. Taking a convolutional layer for example, the input tensors include an activation tensor (also referred to as "input feature map (IFM)" or "input activation tensor") including one or more activations (also referred to as "input elements") and a weight tensor. The weight tensor may be a kernel (a 2D weight tensor), a filter (a 3D weight tensor), or a group of filters (a 4D weight tensor). A convolution may be performed on the input activation tensor and weight tensor to compute an output activation tensor in the convolutional layer.

Tensors in DNNs can be saved in X-major (e.g., XYZ or XZY format), Y-major formats (e.g., YXZ or YZX format), or Z-major formats (e.g., ZXY or ZYX format). The format of a tensor may define the order in which the data points in the tensor are stored, written, or read. The first character may represent the dimension in which data points are contiguous in memory. The second character may represent the dimension in which data points can be accessed after the contiguous data points are accessed in memory. The third character may represent the dimension in which data points are accessed after the data points in the dimension represented by the second character are exhausted. Taking the ZXY format for example, the access order first starts in the Z dimension, then moves to the X dimension, and finally moves to the Y dimension. Data points in the tensor are contiguous in memory in the Z dimension, meaning data points having the same (x, y) coordinates are contiguous in memory. Using tensor permutation, the tensor may be read from memory in a different format.

The significant improvements in DNN model size and accuracy coupled with the rapid increase in computing power of execution platforms have led to the adoption of DNN applications even within resource constrained mobile and edge devices that have limited energy availability. DNN models may be executed, e.g., for training or inference, by DNN accelerators. A DNN accelerator may be or include one or more data processing units. A data processing unit may also be referred to as a compute block or compute tile. A data processing unit may include processing elements (PEs) that can carry out neural network operations.

Many Neural Graph Compilers decompose a DNN to a set of tasks represented by a graph. Each workload may be set to execute on a compute or data movement engine. Compute engine can be a DNN accelerator ("AI accelerator"), central processing unit (CPU), graphics processing unit (GPU), Digital Signal Processor (DSP), and so on. A data movement workload can be a workload to a DMA engine. A major issue in graph execution is the fact that Software/ Firmware Runtime needs to manage the finite hardware resources and orchestrate the execution of graph. For DNNs that involve computations of large amounts of data, memory bandwidth and runtime overhead can be the bottlenecks for efficient DNN execution.

Many currently available approaches use a producer-consumer model and manage ordering through barriers. However, these barrier blocks are finite in number and don't address the need for unlimited barriers in large networks, like large language models. Many barriers are not feasible from a hardware implementation standpoint as the routing complexity grows exponentially. This also drives changes to workload descriptor and memory utilization. These approaches usually require compute engines to be fed one workload at a time by software runtime. Also, the barriers are programmed in small batches and there is no in-built mechanism to ensure barrier safety as hazards arise when dealing with a finite number of barriers. This is because many virtual barriers assigned by compiler need to be mapped to small number of physical barriers at execution time. In addition, there can be many interrupts to be serviced by runtime from each compute element, DMA, and barrier block after completion of workloads and sub-workloads.

The issue with barrier overhead can be more pronounced when the inference has smaller workloads. When the total number of barriers needed by a DNN is small, compiler optimizations may provide the desired performance improvement. However, this solution unfortunately cannot scale to all networks. DNNs with large barrier requirements like transformers (e.g., the order of 65K or more barriers), need to reuse the small number of available physical barriers in hardware more frequently and are prone to barrier hazards. Hazards can occur when multiple workloads that are unrelated to the same virtual barrier (compiler assigned) and chronologically separated but using the same physical barrier in the DAG (Directed Acyclic Graph), get into execution conflict that has to be resolved in the runtime.

Embodiments of the present disclosure may improve on at least some of the challenges and issues described above by providing graph orchestrator blocks that can track producer and consumer dependencies between compute elements and data elements for compiled assigned barriers. A compute element may be also referred to as a compute engine or an agent. An example graph orchestrator can manage the throttling of workloads between compute elements to maintain graph execution integrity while removing hardware/software race conditions and hazards. The graph orchestrator may receive messages from producers qualified by the compiler assigned barrier ID and unblocks the consumers' execution after all the producers are done executing their respective workloads. After all the consumers complete, the barrier may be considered as fully consumed and status bit tracking the barrier at each agent may be cleared. With the graph orchestrator block, a much higher number of barriers can be implemented compared with currently available techniques.

In various embodiments of the present disclosure, a graph may be used to represent workloads in an execution of a DNN. The graph may be generated by a DNN compiler. A barrier may be inserted into the graph and placed between a producing workload performed by a first compute element and a consuming workload performed by a second compute element. The consuming workload performed by a second compute element. The consuming workload is to be performed using data generated from the producing workload. The barrier may be managed by a graph orchestrator, which may track the status of the barrier. For instance, the graph orchestrator may modify status information of the barrier in response to receiving a message from the first compute element. The status information indicates whether one or more producing workloads associated with the barrier are complete. The message indicates that the producing workload is complete. Such a message may be referred to as a producer decrement message or producer barrier decrement message. The graph orchestrator may determine whether the one or more producing workloads are complete based on the modified status information. In response to determining that the one or more producing workloads are complete, the graph orchestrator may lift the barrier and provide a barrier lift message to the second compute element. The barrier lift message causing the second compute element to start the consuming workload. The graph orchestrator may also modify status information of the barrier in response to receiving a message from the second compute element indicating that the consuming workload is started or is complete. Such a message may be referred to as a consumer decrement message or consumer barrier decrement message. The graph orchestrator may determine whether one or more consuming workloads associated with the barrier are complete based on the modified status information. In response to determining that the one or more consuming workloads are complete, the graph orchestrator may clear the barrier and provide a barrier clear message to the first compute element or the second compute element.

The graph orchestrator may manage multiple barriers or even a large number of barriers. The graph orchestrator may maintain a tracking table in which the status information of the barriers is associated with barrier IDs of the barriers. The status information of a barrier may include a producer count and a consumer count. The producer count may indicate the number of unfinished producing workloads associated with the barrier. The consumer count may indicate the number of unfinished consuming workloads associated with the barrier.

The approach in the present disclosure can address the runtime overhead issue by using a compiler and hardware execution paradigm that can remove runtime intervention for normal graph execution making the hardware more autonomous. Runtime intervention may still be needed for advanced scenarios, such as initial setup and programming prior to starting the graph execution, mid execution pre-emption by another higher priority inference request, loading sub-graphs and managing branching between them, post inference cleanup, context clearing, and so on. As software intervention (e.g., interrupt per barrier) can be avoided, the DNN execution can be faster, and no software managed throttling or braking would be needed. A significant performance improvement can be achieved.

For purposes of explanation, specific numbers, materials and configurations are set forth in order to provide a thorough understanding of the illustrative implementations. However, it will be apparent to one skilled in the art that the present disclosure may be practiced without the specific details or that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

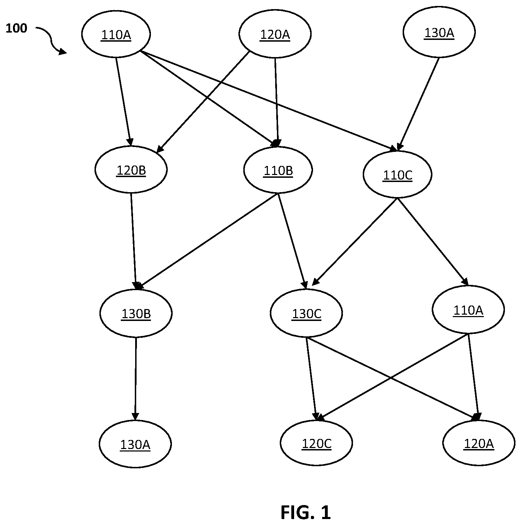

FIG. 1 illustrates an example graph 100 representing workloads in DNN execution, in accordance with various embodiments. The graph 100 may be generated by a compiler that controls the DNN execution. The graph 100 includes nodes and edges. Each node is represented by an oval in FIG. 1. Each edge is represented by an arrow that indicates the direction of the data flow. For the purpose of illustration, the graph 100 includes 12 nodes and 16 edges. In other embodiments, the graph may have fewer or more nodes or have fewer or more edges.

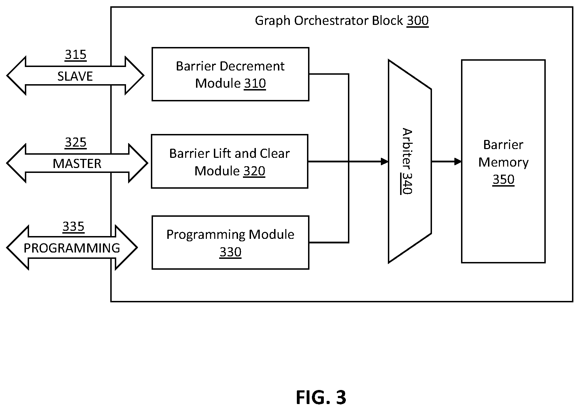

The nodes may represent workloads of compute elements 110A-110C, 120A-120C, and 130A-130C. A workload may be a task in the DNN execution, such as a task of performing a neural network operation (or part of a neural network operation) in the DNN. The compute elements 110A-110C, 120A-120C, and 130A-130C can perform computations in the DNN. A compute element may be an agent. Some compute elements, such as the compute elements 110A, 120A, and 130A, are used for multiple workloads in the graph 100. The associated workloads of the same compute element can be spaced apart in the graph. For instance, the two workloads of the compute element 110A are spaced apart and unblocked by different producers: the first workload is before level-0 while the second workload is after level-1. The timing of execution of each workload is always determined by a graph orchestrator (e.g., the graph orchestrator block 300 in FIG. 3). In some embodiments, the compute elements stall until the graph orchestrator lifts the relevant barrier.

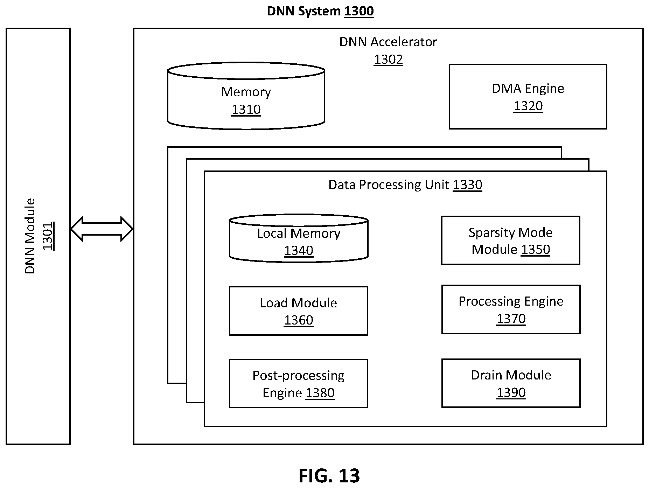

In some embodiments, the compute elements 110A-110C, 120A-120C, and 130A-130C may be in different types of processing units. In an example, the compute elements 110A-110C may be compute elements of a first type of processing unit, the compute elements 120A-120C may be compute elements of a second type of processing unit, and the compute elements 130A-130C may be compute elements of a third type of processing unit. In some embodiments, the compute elements 110A-110C, 120A-120C, and 130A-130C may be components of a DNN accelerator. The first type of processing unit, second type of processing unit, and third type of processing unit may be different ones of data processing unit (e.g., the data processing unit 1330 in FIG. 13), DMA engine (e.g., the DMA engine 1320 in FIG.

13), DSP, other types of processing units, or some combination thereof.

The edges may represent data flows between the compute elements or workloads of the DNN execution. An edge connects two nodes and points from one of the nodes ("first node") to the other one ("second node"), indicating that data flows from the first node to the second node. In some embodiments, the compute element performing the workload represented by the first node is the producer, as it produces data. For instance, the producer compute data by performing one or more computations in a neural network operation. The compute element performing the workload represented by the second node is the consumer, as it consumes data. For instance, the consumer uses the data to perform one or more computations in a neural network operation and may produce new data.

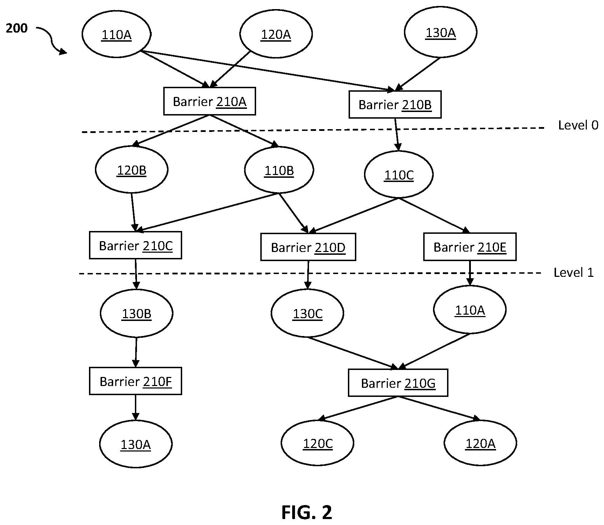

FIG. 2 illustrates an example graph 200 with barriers 210A-210G, in accordance with various embodiments. The graph 200 may be generated by inserting the barriers 210A-210G (collectively referred to as "barriers 210" or "barrier 210") into the graph 100 in FIG. 1. In some embodiments, the graph 200 may be generated by a compiler of a DNN. The compiler may place at least one barrier 210 on each edge. Even though FIG. 2 shows seven barriers 210, the graph 200 may have fewer or more barriers in other embodiments.

Each barrier 210 is placed between a producing workload and a consuming workload. Data may flow from the producing workload to the consuming workload through the barrier 210. The compute element performing the producing workload generates data. The data may be later used by a compute element for performing the consuming workload. A barrier 210 may be associated with multiple producing workloads or multiple consuming workloads.

As shown in FIG. 2, the barrier 210A is on four edges: the edge between the node corresponding to the compute element 110A and the node corresponding to the compute element 110B, the edge between the node corresponding to the compute element 110A and the node corresponding to the compute element 120B, the edge between the node corresponding to the compute element 120A and the node corresponding to the compute element 120B, and the edge between the node corresponding to the compute element 120A and the node corresponding to the compute element 110B.

The barrier 210B is on two edges: the edge between the node corresponding to the compute element 110A and the node corresponding to the compute element 110C, and the edge between the node corresponding to the compute element 130A and the node corresponding to the compute element 110C.

The barrier 210C is on two edges: the edge between the node corresponding to the compute element 120B and the node corresponding to the compute element 130B, and the edge between the node corresponding to the compute element 110B and the node corresponding to the compute element 130B.

The barrier 210D is on two edges: the edge between the node corresponding to the compute element 110B and the node corresponding to the compute element 130C, and the edge between the node corresponding to the compute element 110C and the node corresponding to the compute element 130C.

The barrier 210E is on one edge, i.e., the edge between the node corresponding to the compute element 110C and the node corresponding to the compute element 110A. The barrier 210F is also on one edge, i.e., the edge between the node corresponding to the compute element 130B and the node corresponding to the compute element 130A.

The barrier 210G is on four edges: the edge between the node corresponding to the compute element 130C and the node corresponding to the compute element 120C, the edge between the node corresponding to the compute element 130C and the node corresponding to the compute element 120A, the edge between the node corresponding to the compute element 110A and the node corresponding to the compute element 120C, and the edge between the node corresponding to the compute element 110A and the node corresponding to the compute element 120A.

In some embodiments, each barrier 210 may have multiple states. For instance, a barrier 210 may be on or off. When the barrier 210 is on, it blocks data flow from any producer associated with the barrier 210 to any consumer associated with the barrier 210. Additionally or alternatively, the barrier 210 may block one or more consumers with which it is associated from performing any computation. In an embodiment, the barrier 210 may block all the consumers with which it is associated from starting their workloads. When the barrier 210 is off, data can flow from each producer associated with the barrier 210 to the corresponding consumer. In some embodiments, a barrier 210 is lifted (e.g., the state of a barrier 210 may be changed from on to off) after all the producers associated with the barrier 210 have finished their workloads.

In some embodiments, each barrier 210 may be assigned to a distinct barrier ID. The barrier ID may be a barrier parameter that identifies the barrier. States of the barriers 210 may be tracked for managing and controlling the workloads in the graph 200. In some embodiments the status of a barrier 210 is associated with the barrier ID of the barrier 210. In some embodiments, the tracking information of a barrier 210 may indicate the number of producer(s) that have not finished their workloads. Taking the barrier 210A for example, before the compute elements 110A and 120A finish the corresponding workloads, the number for the barrier 210 is 2. After either the compute element 110A or the compute element 120A, the number may be reduced to 1. After both the compute elements 110A and 120A finish their workloads, the number would be reduced to 0, and the barrier 210 may be lifted. The tracking and updating of the states of the barriers 210 may be managed by a graph orchestrator.

FIG. 3 illustrates an example graph orchestrator block 300, in accordance with various embodiments. The graph orchestrator block 300 includes a barrier decrement module 310, a barrier lift and clear module 320, a programming module 330, an arbiter 340, and a barrier memory 350. In other embodiments, alternative configurations, different or additional components may be included in the graph orchestrator block 300. Further, functionality attributed to a component of the graph orchestrator block 300 may be accomplished by a different component included in the graph orchestrator block 300 or a different block, module, or system.

The barrier decrement module 310 decrements producer counts and consumer counts of barriers. A producer count of a barrier indicates the number of producing workloads that are associated with the barrier and have not been finished, or the number of producers that are associated with the barrier and have not finished the workloads assigned to them. A consumer count of a barrier indicates the number of consuming workloads that are associated with the barrier and have not been finished, or the number of consumers that are associated with the barrier and have not finished the workloads assigned to them. Producer counts or consumer counts can be dynamic. The barrier decrement module 310 may update the producer count (or consumer count) of a barrier as any producer (or consumer) associated with the barrier finishes its workload. In some embodiments, the barrier decrement module 310 is in communication with compute elements through a slave interface 315. In some embodiments, the barrier decrement module 310 may receive a message from a producer (or consumer) when or after the producer completes its workload. In response to receiving the message, the barrier decrement module 310 may decrease the producer count (or consumer count) of the corresponding barrier by one. In embodiments where the compute element is associated with multiple barriers, the barrier decrement module 310 may decrease the producer count (or consumer count) for each of the barriers. In some embodiments, each decrement may be a unique transaction on the slave interface 315. Each unique transaction may be associated with a particular barrier ID.

The barrier lift and clear module 320 lifts and clears barriers. In some embodiments, the barrier lift and clear module 320 determines whether a barrier can be lifted. For instance, the barrier lift and clear module 320 may check the status information of the barrier. The status information may include information indicating the current state of the barrier, e.g., the current producer count of the barrier. The status information may be stored in the barrier memory 350. In response to determine that the status information indicates that all the producers associated with the barrier have finished their workloads (e.g., producer count is 0), the barrier lift and clear module 320 may lift the barrier.

In some embodiments, the barrier lift and clear module 320 determines whether a barrier can be cleared. For instance, the barrier lift and clear module 320 may check the status information of the barrier. The status information may include information indicating the current state of the barrier, e.g., the current consumer count of the barrier. The status information may be stored in the barrier memory 350. In response to determine that the status information indicates that all the consumers associated with the barrier have finished their workloads (e.g., consumer count is 0), the barrier lift and clear module 320 may clear the barrier.

The barrier lift and clear module 320 may also send out barrier lift messages and barrier clear messages through a master interface 325. In some embodiments, the barrier lift and clear module 320 broadcasts barrier lift messages to consumers. For instance, after the barrier lift and clear module 320 lifts a barrier, the barrier lift and clear module 320 may send a barrier lift message to all the consumers, including the consumers associated with the barrier. The barrier lift message may indicate that the barrier has been lifted or cleared. A consumer may know which barrier(s) to query. For instance, the consumer may be programmed via a workload descriptor. The consumer may start its workload when all the required barriers are lifted. In some embodiments, when a barrier is consumed by all agents, it may be returned to a blocked state. This may ensure that the physical barrier is in the correct state for being reused, e.g., as the next virtual barrier.

The programming module 330 may receive programming requests, e.g., from a DMA engine. The programming module 330 may load the producer barrier count or consumer barrier count for each barrier through a programming interface 335. In some embodiments, the programming interface 335 may be a slave interface on the graph orchestrator block 300. Configuration descriptors (e.g., compute program instructions) may be provided to compute elements (e.g., producers and consumers) associated with barriers managed by the graph orchestrator block 300. In some embodiments, a compiler may generate configuration descriptors that can be executed by the compute elements to perform workloads assigned to the consumers for executing a DNN. The configuration descriptors may include one or more configuration parameters indicating that the workload may be started, one or more configuration parameters regarding data movement, and so on. The configuration descriptors may be stored in configuration registers inside or associated with the consumers. The compiler may ensure that the barrier information sent to the barriers block is aligned to the barrier dependencies in the configuration descriptors.

The arbiter 340 is coupled to the barrier decrement module 310, barrier lift and clear module 320, programming module 330 and performs arbitration of data from the barrier decrement module 310, barrier lift and clear module 320, programming module 330 to the barrier memory 350. In some embodiments, the barrier decrement module 310, barrier lift and clear module 320, programming module 330 share the barrier memory 350. For instance, data received, used, or generated by the barrier decrement module 310, barrier lift and clear module 320, programming module 330 may be stored in the barrier memory 350. The arbiter 340 may determine which one(s) of the barrier decrement module 310, the barrier lift and clear module 320, and the programming module 330 may access the barrier memory 350 in a memory cycle (e.g., a data transaction cycle).

The barrier memory 350 stores data received, used, or generated by the barrier decrement module 310, barrier lift and clear module 320, programming module 330. For example, the barrier memory 350 may store a producer count and a consumer count for each barrier. The barrier memory 350 may facilitate updates of producer counts and consumer counts based on decrement requests from computer elements, e.g., from consumers.

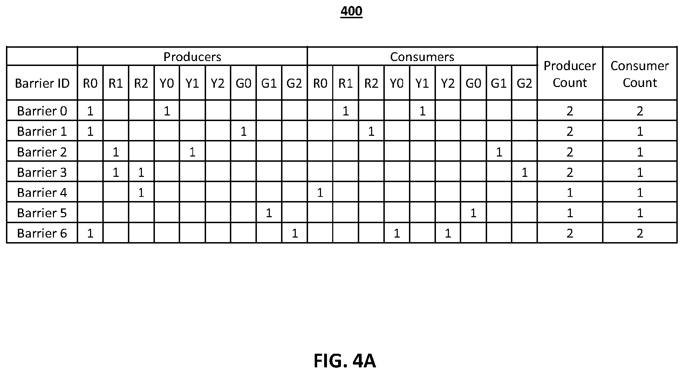

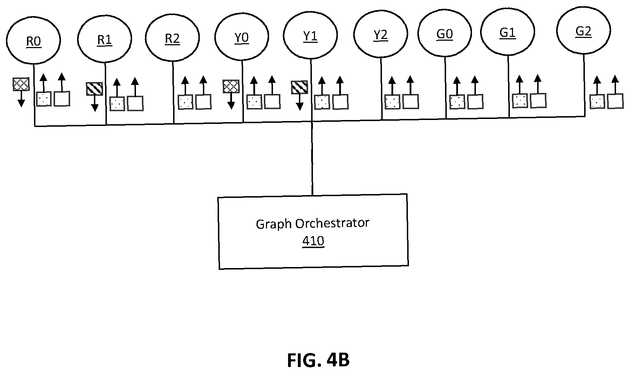

FIGS. 4A and 4B illustrate barrier tracking facilitated by a graph orchestrator 410, in accordance with various embodiments. FIG. 4A shows a barrier tracking table 400. The barrier tracking table 400 may be used for tracking the states of a plurality of barriers, e.g., the barriers 210 in FIG. 2. The barrier tracking table 400 includes a producer count and a consumer count for each of the barriers. The producer counts and consumer counts may be managed by the graph orchestrator 410, an example of which may be the graph orchestrator block 300 in FIG. 3. In some embodiments, the producer counts and consumer counts are stored in a memory of the graph orchestrator 410, e.g., the barrier memory 350 in FIG. 3. The producer counts and consumer counts may be accessed and updated, e.g., by the barrier decrement module 310 in FIG. 3.

As shown in FIG. 4A, the barrier tracking table 400 includes a column listing barrier IDs. The barrier IDs may identify the barriers whose status information are in the barrier tracking table 400. For the purpose of illustration and simplicity, FIG. 4A shows six barriers: Barrier 0-6. The barrier IDs of these barriers are all different. Each barrier has a row in the barrier tracking table 400. In other embodiments, the barrier tracking table 400 may be used to track the states of fewer or more barriers and may have a different number of rows. The barrier tracking table 400 also lists a plurality of agents, including R0-R2, Y0-Y2, and G1-G2, which may be examples of compute elements. In an example, R0-R2 may be compute elements 110A-110C, respectively; Y0-Y2 may be compute elements 120A-120C, respectively; and G1-G2 may be compute elements 130A-120C, respectively. The agents function as producers and consumers. The barrier tracking table 400 maps the agents to producer counts and consumer counts in a per-barrier configuration.

Each producer count is the number of producers that are associated with the corresponding barrier and have not finished workloads assigned to them. The producer count may start with the total number of producers associated with the barrier. As the producers finish their workloads, the producer count may be decreased accordingly. Each consumer count is the number of consumers that are associated with the corresponding barrier and have not finished workloads assigned to them. The consumer count may start with the total number of consumers associated with the barrier. As the consumers finish their workloads, the consumer count may be decreased accordingly. For the purpose of illustration and simplicity, the barrier tracking table 400 may be used for DNN execution in the embodiments of FIG. 2. The producer counts and consumer counts in the barrier tracking table 400 may be the initial producer counts and initial consumer counts of the barriers 210 in FIG. 2.

In some embodiments, messages are used to broadcast barrier information for the graph orchestrator 410 to all agents. This scheme may be independent of the number of agents. FIG. 4B shows the graph orchestrator 410 listening to producer events and unblocking consumers. Producer decrement is represented by a box with a diagonal diamond pattern in FIG. 4B. Consumer decrement is represented by a box with a diagonal stripes pattern in FIG. 4B. Barrier lift is represented by a box with a dot pattern in FIG. 4B. Barrier clear is represented by a blank box in FIG. 4B. An agent (e.g., R0 or Y0) may send a producer decrement message when it completes a workload. An agent (e.g., R1 or Y2) may send a consumer decrement message when it starts a workload. The graph orchestrator 410 may receive producer decrement messages and consumer decrement messages. The graph orchestrator 410 may lift or clear barriers based on the producer decrement messages and consumer decrement messages. In some embodiments, the graph orchestrator 410 may send out barrier lift messages ("lift messages") or barrier clear messages ("clear messages") as broadcasted messages. Broadcasted messages may be messages broadcasted by the graph orchestrator 410 to some or all the agents. A lift message may unblock one or more specific consumers despite that the lift message may be broadcasted to all the agents. A clear message may be a notification to all agents that the barrier has been fully consumed.

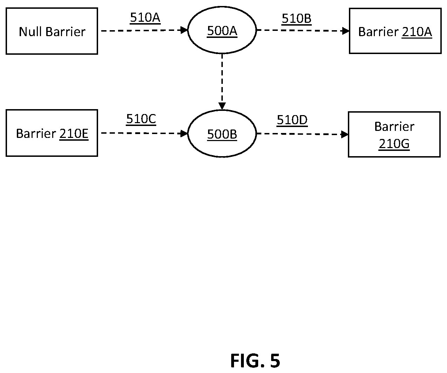

FIG. 5 illustrates a linked list of workloads 500A and 500B of a compute element, in accordance with various embodiments. For the purpose of illustration, FIG. 5 shows the workloads of the compute element 110A in the graph 200 in FIG. 2. The workloads 500A and 500B are linked as they are performed by the same compute element. The workload 500A may be the first workload in the link. The workload 500A has two barrier dependencies 510A and 510B. The barrier dependency 510A corresponds to a null barrier in FIG. 5 as the compute element 110A is not a consumer for performing the workload 500A. The barrier dependency 510B corresponds to the barrier 210A, as the compute element 500A functions as a producer for performing the workload 500A with respect to the barrier 210A. The barrier 210A may be a producer barrier of the compute element 110A for the workload 500A.

The compute element 110A may also move to the next workload in the link, e.g., the workload 500B. The workload 500B has two barrier dependencies 510C and 510D. The barrier dependency 510C corresponds to the barrier 210E. The barrier dependency 510D corresponds to the barrier 210G. For the workload 500B, the compute element 110A is a consumer with respect to the barrier 210E and a producer with respect to the barrier 210G, as shown in FIG. 2. The barrier 210E may be a consumer barrier of the compute element 110A for the workload 500B. The barrier 210G may be a producer barrier of the compute element 110A for the workload 500B.

The linked list of workloads 500A and 500B may correspond to a linked list of descriptors associated with the compute element 110A. A descriptor may be a configuration descriptor that configures the operation of the compute element 110A for the corresponding workload. In an example, the workload descriptor of the compute element 110A for the workload 500A or 500B may include producer of barrier IDs, consumer of barrier IDs, and link to the next workload descriptor in memory, etc. In some embodiments, compute elements may determine whether to start workloads based on descriptors for the workloads. Taking the workload 500B for example, the compute element 110A, as a consumer of the barrier 210E for the workload 500B, may receive a barrier lift message from the graph orchestrator, as described above. The barrier lift message may indicate the barrier ID of the barrier 210E and that the barrier has been lifted. The compute element 110A may decode the barrier lift message. The compute element 110A may compare the barrier ID in the barrier lift message with one or more barriers IDs in the descriptor for the workload 500B, such as "consumer of barrier IDs" in the descriptor. When there is a match, the compute element 110A may confirm that the barrier 210E has been lifted and may start executing the workload 500B.

Workload descriptors, along with workload attributes, may include the compiler assigned producer and consumer barrier IDs to compare against the barrier lift messages received by the compute elements from the graph orchestrator. In a scenario where the network needs fewer barriers than supported by the processing units, the lower order bits of the compiler barrier IDs may be used.

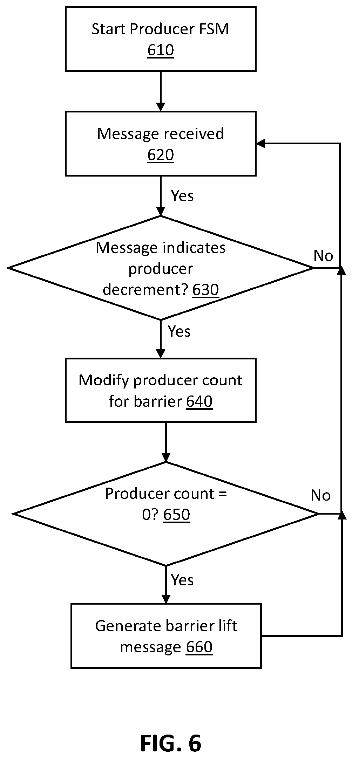

FIG. 6 illustrates a graph orchestrator producer flow, in accordance with various embodiments. An example of the graph orchestrator may be the graph orchestrator block 300 in FIG. 3. The flow in FIG. 6 includes a sequence of steps. The steps may indicate operations performed by the graph orchestrator for a producer managed by the graph orchestrator.

In step 610, a producer FSM (finite state machine) is started by the graph orchestrator. The producer FSM may control workloads performed by the producer.

For instance, the producer FSM may be controlled by a configuration descriptor provided to the producer, e.g., by a compiler. The producer FSM may process producer decrement messages received from compute elements. A compute element may send a consumer barrier decrement message when it starts a workload. A compute element may send a producer decrement message when it completes a workload.

In step 620, a message is received from the producer. The message may be received by the graph orchestrator through a slave interface, e.g., the slave interface 315.

In step 630, the graph orchestrator determines whether the message indicates producer decrement. For instance, the graph orchestrator may determine whether the message indicates completion of workload execution by the producer. In embodiments where the graph orchestrator determines that the message does not indicate producer decrement, the flow goes back to step 620, and the graph orchestrator would wait for the next message from the producer. In embodiments where the graph orchestrator determines that the message indicates producer decrement, step 640 is performed, in which the graph orchestrator modifies the producer count for the barrier. For instance, the graph orchestrator may decrease the producer count by one.

In step 650, the graph orchestrator determines whether the producer count of the barrier is 0. In embodiments where the graph orchestrator determines that the producer count of the barrier is not 0, the flow goes back to step 620, and the graph orchestrator would wait for the next message from the producer. In where the graph orchestrator determines that the producer count of the barrier is 0, step 660 is performed, in which the graph orchestrator generates a barrier lift message. Even though not shown in FIG. 6, the graph orchestrator may send the barrier lift message to all the consumers associated with the barrier. In some embodiments, the graph orchestrator has a broadcast fabric that is used to transport the message to all agents. Each agent may maintain a single barrier status bit for all barriers. An agent may query the relevant barrier(s) as defined in their configuration descriptor. An agent may not query barriers that are not defined in their configuration descriptor. After step 660, the flow goes back to step 620, and the graph orchestrator would wait for the next message from the producer.

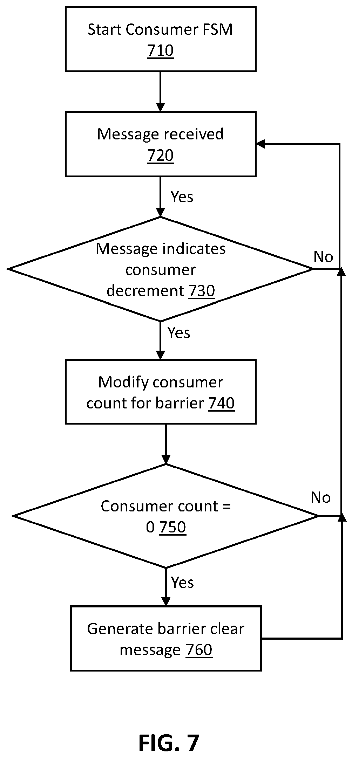

FIG. 7 illustrates a graph orchestrator consumer flow, in accordance with various embodiments. An example of the graph orchestrator may be the graph orchestrator block 300 in FIG. 3. The flow in FIG. 7 includes a sequence of steps. The steps may indicate operations performed by the graph orchestrator for a consumer managed by the graph orchestrator.

In step 710, a consumer FSM is started by the graph orchestrator. The consumer FSM may process consumer decrement messages received from compute elements. The compute elements may know what consumer messages to generate based on information in the per workload configuration descriptor. The configuration descriptor may be provided to the compute elements by a compiler. The consumer FSM may also facilitate receiving messages from the graph orchestrator, including barrier lift messages.

In step 720, a message is received from the consumer. The message may be received by the graph orchestrator through a master interface, e.g., the master interface 325.

In step 730, the graph orchestrator determines whether the message indicates consumer decrement. For instance, the graph orchestrator may determine whether the message indicates completion of workload execution by the consumer. In embodiments where the graph orchestrator determines that the message does not indicate consumer decrement, the flow goes back to step 720, and the graph orchestrator would wait for the next message from the consumer. In embodiments where the graph orchestrator determines that the message indicates consumer decrement, step 740 is performed, in which the graph orchestrator modifies the consumer count for the barrier. For instance, the graph orchestrator may decrease the consumer count by one.

In step 750, the graph orchestrator determines whether the consumer count of the barrier is 0. In embodiments where the graph orchestrator determines that the consumer count of the barrier is not 0, the flow goes back to step 720, and the graph orchestrator would wait for the next message from the consumer. In where the graph orchestrator determines that the consumer count of the barrier is 0, step 760 is performed, in which the graph orchestrator generates a barrier clear message. Even though not shown in FIG. 7, the graph orchestrator may send the barrier clear message to all the producers associated with the barrier, e.g., through a broadcast fabric. As described above, each agent may maintain a single barrier status bit for all barriers and query the relevant barrier(s) as defined in its configuration descriptor. After step 760, the flow goes back to step 720, and the graph orchestrator would wait for the next message from the consumer.

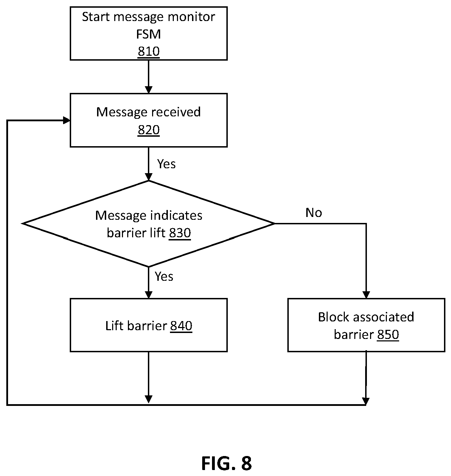

FIG. 8 illustrates a compute element barrier updating flow, in accordance with various embodiments. Examples of the compute element may include the compute elements 110A-110C, 120A-120C, and 130A-130C in FIG. 1 and FIG. 2. The flow in FIG. 8 includes a sequence of steps. The steps may indicate operations performed by the compute element. In some embodiments, the compute element may be a consumer associated with one or more barriers managed by a graph orchestrator.

In step 810, a message monitor FSM is started. The message monitor FSM may monitor messages sent to the compute element, e.g., messages from the graph orchestrator. The messages may include barrier lift messages or barrier clear messages.

In step 820, a message is received by the compute element. The message may be received by the graph orchestrator. The graph orchestrator may manage one or more barriers associated with the compute element.

In step 830, the compute element determines whether the message indicates barrier lift. The compute element may determine whether the barrier ID in the message matches a barrier ID in a descriptor received by the compute element and query the barrier when there is a match. In some embodiments, the compute element may maintain status for one or more barriers that are not defined in the configuration descriptor. In embodiments where the compute element determines that the message indicates barrier lift (e.g., the barrier ID matches), step 840 is performed, in which the compute element lifts the barrier. Even though not shown in FIG. 8, the compute element may start a workload associated with the barrier after the barrier is lifted. Then the flow goes back to step 820, and the compute element would wait for the next message from the graph orchestrator.

In embodiments where the compute element determines that the message does not indicate barrier lift (e.g., the barrier ID does not match), the flow goes back to step 850, in which the associated barrier is blocked. Then the flow goes back to step 820, and the compute element would wait for the next message from the graph orchestrator.

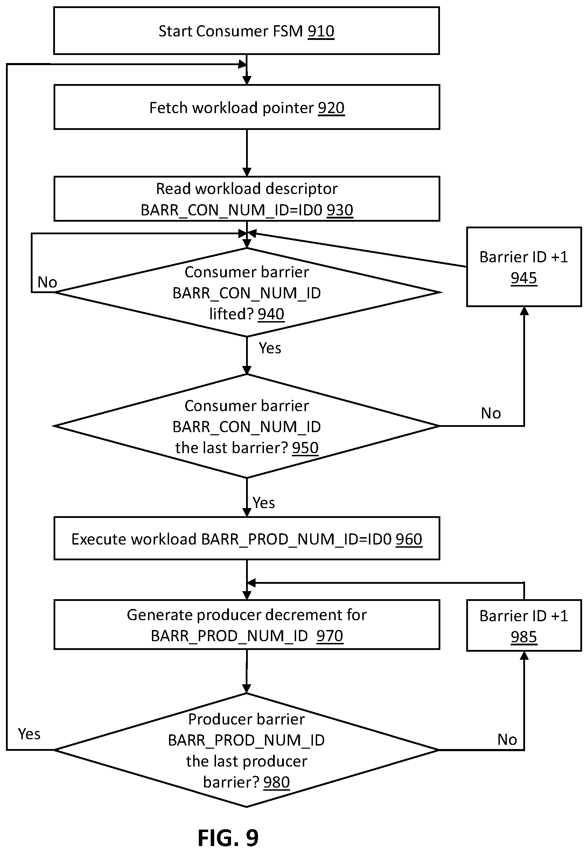

FIG. 9 illustrates a compute element barrier processing flow, in accordance with various embodiments. Examples of the compute element may include the compute elements 110A-110C, 120A-120C, and 130A-130C in FIG. 1 and FIG. 2. The flow in FIG. 9 includes a sequence of steps. The steps may indicate operations performed by the compute element. In some embodiments, the compute element may be a consumer associated with one or more barriers managed by a graph orchestrator.

In step 910, a consumer FSM is started. The consumer FSM may facilitate workloads performed by the compute element as consumers. In step 920, a workload pointer is fetched. In step 930, the compute element reads a workload descriptor. The workload descriptor may include information indicating the barrier ID of a barrier associated with the compute element for executing a workload. In an example, the barrier ID in the workload descriptor may be BARR_CON_NUM_ID=ID0.

In step 940, the compute element determines whether the consumer barrier is lifted. In embodiments where the compute element determines that the consumer barrier is not lifted, the flow goes back to the input of step 940, and the step 940 may be performed again to check the status of the same barrier again. In embodiments where the compute element determines that the consumer barrier is the last consumer barrier, the flow goes to step 950. The computer element determines whether the consumer barrier is the last consumer barrier in step 950. In embodiments where the computer element determines that the barrier is not the last consumer barrier, the compute element identifies the next barrier ID from the configuration descriptor in step 945. After the computer element picks the next barrier ID, it loops back the input of step 940. This new barrier ID may point to another barrier associated with the compute element. Then the flow goes back to step 930, and the step 930 may be performed again for the new barrier ID.

In embodiments where the computer element determines that the barrier is the last consumer barrier, the flow goes to step 960, in which the compute element executes a workload for which the compute element is a producer. The compute element then generates a producer decrement signal for the barrier in step 970. In some embodiments, step 970 is performed after the compute element completes the execution of the workload.

In step 980, the computer element determines whether the barrier is the last producer barrier. In embodiments where the computer element determines that the barrier is not the last producer barrier, the compute element identifies the next barrier ID from the configuration descriptor in step 945. This new barrier ID may point to another barrier associated with the compute element. Then the flow goes back to step 970, and the step 970 may be performed again for the new barrier ID. In embodiments where the computer element determines that the barrier is the last producer barrier, the flow goes back to step 920, in which a new workload pointer may be fetched.

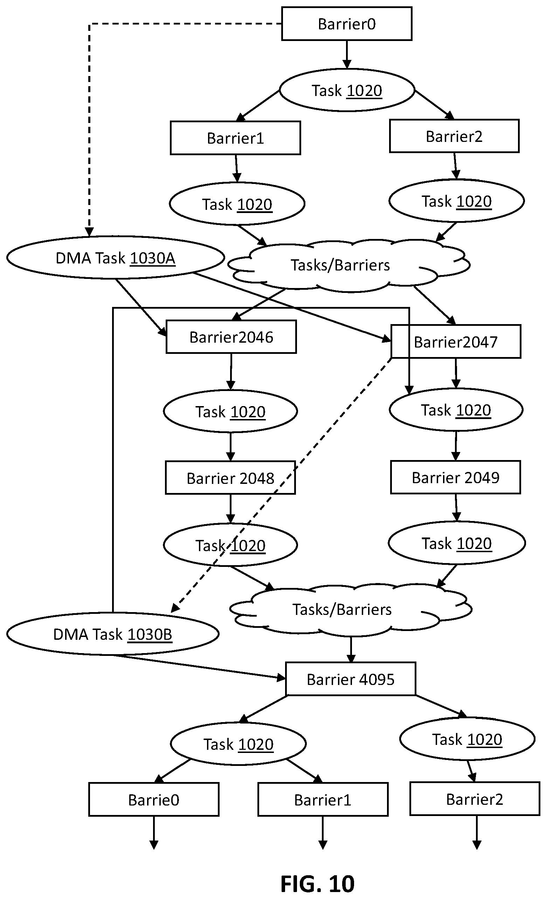

FIG. 10 illustrates DMA workloads to program a barrier memory, in accordance with various embodiments. An example of the barrier memory is the barrier memory 350 in FIG. 3. For the purpose of illustration and simplicity, FIG. 10 shows various tasks (individually referred to as "task 1020") and various barriers (e.g., barrier0-2, barreri2046-2049, and barrier 4095). The numbers of the barriers may be barrier IDs. The tasks 1020 may be tasks for executing a DNN. A task 1020 may be a workload, e.g., the workloads described above. The tasks 1020 may be performed by compute elements. The barriers may be managed by a graph orchestrator, e.g., the graph orchestrator block 300. The barrier memory may be a memory in the graph orchestrator. In some embodiments, the barrier memory in FIG. 10 is associated with barrier[4095:0], which is a total of 4096 barriers or even more barriers. In some embodiments, barrier[2047:0] may be associated with the first half of the barrier memory. For instance, the tracking table for barrier[2047:0] may be stored in the first half of the barrier memory. Barrier[4095:2048] may be associated with the second half of the barrier memory. For instance, the tracking table for barrier[4095:2048] may be stored in the second half of the barrier memory.

FIG. 10 also shows two DMA tasks 1030A and 1030B. The DMA tasks 1030A and 1030B may be performed by a DMA engine, e.g., the DMA engine 1320 in FIG. 13. The DMA task 1030A may be a task to load barrier[4095:2048]. The DMA engine may produce into barrier[2047:2046] to block any producers producing into barrier barrier[4095:2048] before they are configured. The DMA tasks 1030B may be a task to load barrier [2047:0]. The dashed arrows represent dependencies on the DMA tasks 1030A and 1030B, respectively, to ensure that the barriers in a page are fully exhausted before being reused. In an example, Barrier0, Barrier1, and Barrier 2 below the barrier 4095 in FIG. 10 are VIRTUAL1.BARRIERx, while the other barriers are VIRTUAL0.BARRIERx. In some embodiments, the DMA engine may consume barrier[2047:2046] and prevent barrier[2047:0] from being overwritten before they are consumed. In some embodiments, the barrier memory may be configured as a ping pong buffer, where barrier dependencies may ensure that while a portion (e.g., the first half) of the buffer is being produced into and consumed by the compute elements or compute engines, another portion (e.g., the second half) of the buffer is loaded by the DMA engine. While the second half of the buffer is being produced into and consumed by the compute elements or compute engines, the first half of the buffer is loaded by the DMA engine.

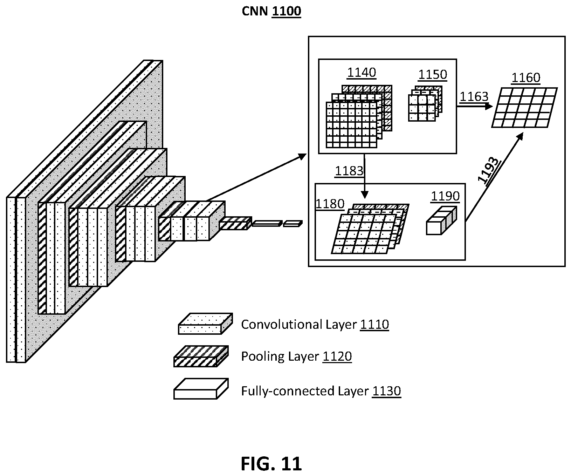

FIG. 11 illustrates an example CNN 1100, in accordance with various embodiments. The CNN 1100 may be at least partially executed by a DNN accelerator, e.g., the DNN accelerator 1302 in FIG. 13. The execution of the CNN 1100 may be facilitated by a graph orchestrator, e.g., the graph orchestrator block 300. For the purpose of illustration, the CNN 1100 includes a sequence of layers comprising a plurality of convolutional layers 1110 (individually referred to as "convolutional layer 1110"), a plurality of pooling layers 1120 (individually referred to as "pooling layer 1120"), and a plurality of fully-connected layers 1130 (individually referred to as "fully-connected layer 1130"). In other embodiments, the CNN 1100 may include fewer, more, or different layers. In an execution of the CNN 1100, the layers of the CNN 1100 execute tensor computation that includes many tensor operations, such as matrix multiplications, convolutions (e.g., multiply-accumulate (MAC) operations, etc.), pooling operations, elementwise operations (e.g., elementwise addition, elementwise multiplication, etc.), other types of tensor operations, or some combination thereof.

The convolutional layers 1110 summarize the presence of features in inputs to the CNN 1100. The convolutional layers 1110 function as feature extractors. The first layer of the CNN 1100 is a convolutional layer 1110. In an example, a convolutional layer 1110 performs a convolution on an input tensor 1140 (also referred to as IFM 1140) and a filter 1150. As shown in FIG. 11, the IFM 1140 is represented by a $7 \times 7 \times 3$ three-dimensional (3D) matrix. The IFM 1140 includes 3 input channels, each of which is represented by a $7 \times 7$ two-dimensional (2D) matrix. The $7 \times 7$ 2D matrix includes 7 input elements (also referred to as input points) in each row and 7 input elements in each column. The filter 1150 is represented by a $3 \times 3 \times 3$ 3D matrix. The filter 1150 includes 3 kernels, each of which may correspond to a different input channel of the IFM 1140. A kernel is a 2D matrix of weights, where the weights are arranged in columns and rows. A kernel can be smaller than the IFM. In the embodiments of FIG. 11, each kernel is represented by a $3 \times 3$ 2D matrix. The $3 \times 3$ kernel includes 3 weights in each row and 3 weights in each column. Weights can be initialized and updated by backpropagation using gradient descent. The magnitudes of the weights can indicate importance of the filter 1150 in extracting features from the IFM 1140.

The convolution includes MAC operations with the input elements in the IFM 1140 and the weights in the filter 1150. The convolution may be a standard convolution 1163 or a depthwise convolution 1183. In the standard convolution 1163, the whole filter 1150 slides across the IFM 1140. All the input channels are combined to produce an output tensor 1160 (also referred to as OFM 1160). The OFM 1160 is represented by a $5 \times 5$ 2D matrix. The $5 \times 5$ 2D matrix includes 5 output elements (also referred to as output points) in each row and 5 output elements in each column. For the purpose of illustration, the standard convolution includes one filter in the embodiments of FIG. 11. In embodiments where there are multiple filters, the standard convolution may produce multiple output channels in the OFM 1160.

The multiplication applied between a kernel-sized patch of the IFM 1140 and a kernel may be a dot product. A dot product is the elementwise multiplication between the kernel-sized patch of the IFM 1140 and the corresponding kernel, which is then summed, always resulting in a single value. Because it results in a single value, the operation is often referred to as the "scalar product." Using a kernel smaller than the IFM 1140 is intentional as it allows the same kernel (set of weights) to be multiplied by the IFM 1140 multiple times at different points on the IFM 1140. Specifically, the kernel is applied systematically to each overlapping part or kernel-sized patch of the IFM 1140, left to right, top to bottom. The result from multiplying the kernel with the IFM 1140 one time is a single value. As the kernel is applied multiple times to the IFM 1140, the multiplication result is a 2D matrix of output elements. As such, the 2D output matrix (i.e., the OFM 1160) from the standard convolution 1163 is referred to as an OFM.

In the depthwise convolution 1183, the input channels are not combined. Rather, MAC operations are performed on an individual input channel and an individual kernel and produce an output channel. As shown in FIG. 11, the depthwise convolution 1183 produces a depthwise output tensor 1180. The depthwise output tensor 1180 is represented by a $5 \times 5 \times 3$ 3D matrix. The depthwise output tensor 1180 includes 3 output channels, each of which is represented by a $5 \times 5$ 2D matrix. The $5 \times 5$ 2D matrix includes 5 output elements in each row and 5 output elements in each column. Each output channel is a result of MAC operations of an input channel of the IFM 1140 and a kernel of the filter 1150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 1193 is then performed on the depthwise output tensor 1180 and a $1\times1\times3$ tensor 1190 to produce the OFM 1160.

The OFM 1160 is then passed to the next layer in the sequence. In some embodiments, the OFM 1160 is passed through an activation function. An example activation function is rectified linear unit (ReLU). ReLU is a calculation that returns the value provided as input directly, or the value zero if the input is zero or less. The convolutional layer 1110 may receive several images as input and calculate the convolution of each of them with each of the kernels. This process can be repeated several times. For instance, the OFM 1160 is passed to the subsequent convolutional layer 1110 (i.e., the convolutional layer 1110 following the convolutional layer 1110 generating the OFM 1160 in the sequence). The subsequent convolutional layers 1110 perform a convolution on the OFM 1160 with new kernels and generate a new feature map. The new feature map may also be normalized and resized. The new feature map can be kernelled again by a further subsequent convolutional layer 1110, and so on.

In some embodiments, a convolutional layer 1110 has four hyperparameters: the number of kernels, the size F kernels (e.g., a kernel is of dimensions $F\times F\times D$ pixels), the S step with which the window corresponding to the kernel is dragged on the image (e.g., a step of one means moving the window one pixel at a time), and the zero-padding P (e.g., adding a black contour of P pixels thickness to the input image of the convolutional layer 1110). The convolutional layers 1110 may perform various types of convolutions, such as 2-dimensional convolution, dilated or atrous convolution, spatial separable convolution, depthwise separable convolution, transposed convolution, and so on. The CNN 1100 includes 116 convolutional layers 1110. In other embodiments, the CNN 1100 may include a different number of convolutional layers.

The pooling layers 1120 down-sample feature maps generated by the convolutional layers, e.g., by summarizing the presence of features in the patches of the feature maps. A pooling layer 1120 is placed between two convolution layers 1110: a preceding convolutional layer 1110 (the convolution layer 1110 preceding the pooling layer 1120 in the sequence of layers) and a subsequent convolutional layer 1110 (the convolution layer 1110 subsequent to the pooling layer 1120 in the sequence of layers). In some embodiments, a pooling layer 1120 is added after a convolutional layer 1110, e.g., after an activation function (e.g., ReLU, etc.) has been applied to the OFM 1160.

A pooling layer 1120 receives feature maps generated by the preceding convolution layer 1110 and applies a pooling operation to the feature maps. The pooling operation reduces the size of the feature maps while preserving their important characteristics. Accordingly, the pooling operation improves the efficiency of the DNN and avoids over-learning. The pooling layers 1120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is $2\times2$ pixels applied with a stride of two pixels, so that the pooling operation reduces the size of a feature map by a factor of 2, e.g., the number of pixels or values in the feature map is reduced to one quarter the size. In an example, a pooling layer 1120 applied to a feature map of $6\times6$ results in an output pooled feature map of $3\times3$. The output of the pooling layer 1120 is inputted into the subsequent convolution layer 1110 for further feature extraction. In some embodiments, the pooling layer 1120 operates upon each feature map separately to create a new set of the same number of pooled feature maps.

The fully-connected layers 1130 are the last layers of the DNN. The fully-connected layers 1130 may be convolutional or not. The fully-connected layers 1130 receive an input operand. The input operand defines the output of the convolutional layers 1110 and pooling layers 1120 and includes the values of the last feature map generated by the last pooling layer 1120 in the sequence. The fully-connected layers 1130 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully-connected layer 1130 by using a logistic function (binary classification) or a SoftMax function (multi-class classification) as an activation function. In some embodiments, the fully-connected layers 1130 multiply each input element by weight, make the sum, and then apply an activation function (e.g., logistic if N=2, SoftMax if N>2). This is equivalent to multiplying the input operand by the matrix containing the weights.

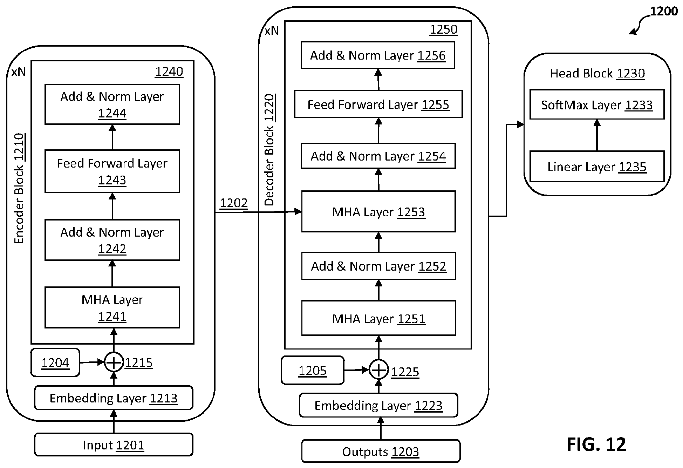

FIG. 12 illustrates an example transformer model 1200, in accordance with various embodiments. The transformer model 1200 may be at least partially executed by a DNN accelerator, e.g., the DNN accelerator 1302 in FIG. 13. The execution of the transformer model 1200 may be facilitated by a graph orchestrator, e.g., the graph orchestrator block 300. The transformer model 1200 may transform input sequences into output sequences. In some embodiments, the transformer model 1200 is a neural network that can learn context and meaning by tracking relationships in sequential data, such as sequential words in a sentence, sequential audio signals, sequential images, and so on. In an example, the transformer model 1200 may be a large language model (LLM). The transformer model 1200 includes an encoder block 1210, a decoder block 1220, and a linear block 1230. In other embodiment, different or additional components may be included in the transformer model 1200. Further, functionality attributed to a component of the transformer model 1200 may be accomplished by a different component included in the transformer model 1200 or a different model or module.

The encoder block 1210 receives input sequences and generates matrix representations of the input sequences. In the embodiments of FIG. 12, the encoder block 1210 receives inputs 1201 and generates encoder outputs 1202. In some embodiments, the inputs 1201 may include one or more input tokens, such as words, phrases, sentences, images, audio signals, other types of input tokens, or some combination thereof. In an example, the inputs 1201 may include a prompt received from a user of the transformer model 1200. The prompt may include a question or request made by the user. A word in the prompt may be an input token. The encoder outputs 1202 may include one or more vectors that are contextualized representations of the input 1201. Each vector in the encoder outputs 1202 may represent a token in the input 1201 with contextual understanding.

The encoder block 1210 includes an embedding layer 1213, a positional encoding layer 1215, and a plurality of layers 1240 (individually referred to as "layer 1240"). In other embodiments, the encoder block 1210 may have different, fewer, or more components. Also, the arrangement of the components in the encoder block 1210 may be different from the arrangement shown in FIG. 12. For the purpose of illustration, the encoder block 1210 has N layers in FIG. 12, where N is an integer. Each layer 1240 may include one or more neural network operations. The layers 1240 may transform a sequence of embeddings into a representation that encapsulates the learned information from the input 1201. Different layers 1240 may have different internal parameters, e.g., different weights, bias, or other types of internal parameters. In some embodiments, the layers 1240 have identical components. The components in a layer 1240 may be layers and may also be referred to as sub-layers of the layer 1240. As shown in FIG. 12, a layer 1240 includes four sub-layers: a multi-head attention (MHA) layer 1241, an add & norm layer 1242, a feed forward layer 1243, and another add & norm layer 1244.

The decoder block 1220 iteratively generates outputs 1203 using encoded representations generated by the encoder block 1210. The decoder block 1220 includes an embedding layer 1213, a positional encoding layer 1225, and a plurality of layers 1250 (individually referred to as "layer 1250"). For the purpose of illustration, the decoder block 1220 has N layers in FIG. 12, where N is an integer. In the embodiments of FIG. 12, the number of layers 1250 in the decoder block 1220 is the same as the number of layers 1240 in the encoder block 1210. In other embodiments, the number of layers 1250 in the decoder block 1220 may be different from the number of layers 1240 in the encoder block 1210. Each layer 1250 may include one or more neural network operations. Different layers 1250 may have different internal parameters. In some embodiments, the layers 1250 may have identical components. The components in a layer 1250 may be layers and may also be referred to as sub-layers of the layer 1250. As shown in FIG. 12, a layer 1250 includes six sub-layers: an MHA layer 1251, an add & norm layer 1252, an encoder-decoder attention layer 1253, another add & norm layer 1254, a feed forward layer 1255, and another add & norm layer 1256.

In some embodiments, a sequence of inference phases is performed in the decoder block 1220 using encoder outputs, e.g., the encoder outputs 1202. A matrix may be predicted through each inference phase. The outputs 1203 may include a plurality of matrices. Each matrix may be further processed in the linear block 1230 to predict a token. The plurality of matrices may be used to predict a sequence of tokens. For the first inference phase, the decoder block 1220 may receive one or more start tokens as input tokens and compute a first matrix from the input tokens and the output of the encoder block 1210. The first matrix may be used by the linear block 1230 to predict a first token. The predicted token may be used as a new input token, in addition to the start token(s), in the second inference phase. Similarly, a second token may be predicted through the second inference phase and may be used in the third inference phase. This iteration may continue till all the inference phases are complete.

The linear block 1230 receives the output of the decoder block 1220 and processes it in a linear layer 1233 and a SoftMax layer 1235. A linear operation may be performed on the output of the decoder block 1220 in the linear layer 1233. The linear operation may include a multiplication of the output of the decoder block 1220 with a weight matrix. The output of the linear layer 1233 may be a vector. In some embodiments, the linear block 1230 may function as a classifier. The number of data elements in the vector computed in the linear layer 1233 may depend on the number of classes involved. In an example where there are M classes, where M is an integer, the vector computed in the linear layer 1233 may have M data elements representing the prediction for the M classes, respectively.

The output of the linear layer 1233 may be input into the SoftMax layer 1235. A SoftMax function may be applied on the output of the linear layer 1233 to compute probability scores. A probability score may have a value in the range from 0 to 12. In some embodiments, a probability value is computed for each data element in the vector computed in the linear layer 1233. The highest one of the probability scores may be the key. The corresponding index of the key may point to the token that the transformer model 1200 predicts as the next in the sequence. The final output of the transformer model 1200 may be the sequence of predicted tokens. In some embodiments, the linear block 1230 may be a language modeling head.

An embedding layer (e.g., the embedding layer 1213 or the embedding layer 1215) converts an input of the embedding layer (e.g., the inputs 1201 or the outputs 1203) into one or more embeddings. An embedding may be a vector, which is also referred to as an embedding vector or a vector embedding. The vector embedding may include a sequence of data elements. In some embodiments, the embedding layer 1213 may generate a plurality of embeddings, each of which may be converted from a different input token in the inputs 1201. The embeddings may capture the semantic meaning of the tokens in the input 1201. The embeddings may be numerical representations that capture the relationships or meanings of words, phrases, or other data types. In an example where the input 1201 is a prompt including a sequence of words, the embedding layer 1213 may generate an embedding from each word in the input 1201. The embedding layer 1223 in the decoder block 1220 may generate a plurality of embeddings from tokens received by the decoder block 1220 in a similar manner as the embedding layer 1213.

A positional encoding layer (e.g., the positional encoding layer 1215 or the positional encoding layer 1225) performs positional encoding on embeddings generated in the corresponding embedding layer. In some embodiments, the positional encoding layer may apply one or more positional encoding vectors (e.g., a positional encoding vector 1204 or positional encoding vector 1205) on vector embeddings from the corresponding embedding layer to generate new vector embeddings that represents the embeddings with positional context. The positional encoding vector may encode information about the position of the embedding in a sequence of embeddings. In some embodiments, the positional encoding layer performs an addition operation on a positional encoding vector and a vector embedding. The addition operation may be elementwise addition. The positional encoding layer may output an embedding matrix that includes the vector embeddings computed in the positional encoding layer.

An MHA layer (e.g., the MHA layer 1241, the MHA layer 1251, or the MHA layer 1253) may implement a multi-head attention mechanism, which may be a multi-head self-attention mechanism or a multi-head cross-attention mechanism. In some embodiments, the MHA layer 1231 or the MHA layer 1251 may implement a self-attention mechanism. For self-attention, the queries, keys, and values may come from the same place. For instance, for the MHA layer 1241, the queries, keys, and values may all come from the positional encoding layer 1215. For the MHA layer 1251, the queries, keys, and values may all come from the positional encoding layer 1225. The self-attention mechanism may enable the transformer model 1200 to relate each token with other tokens. The MHA layer may compute attention scores from embeddings generated in the corresponding positional encoding layer. In some embodiments, the MHA layer may receive one or more queries, one or more keys, and one or more values. In some embodiments, the MHA layer has a number of heads that receive different linearly projected versions of the queries, keys, and values and produce outputs in parallel that are then used to generate the final result.

In some embodiments, the queries, keys, and values input into the MHA layer 1241 may be computed from vector embeddings generated by the positional encoding layer 1215. The queries, keys, and values input into the MHA layer 1251 may be computed from vector embeddings generated by the positional encoding layer 1225. A query, key, or value may be a vector the represents a token in a sequence. In some embodiments, a query matrix $Q \in \mathbb{R}^{N \times h}$ may be computed by multiply an embedding matrix $X \in \mathbb{R}^{N \times d}$ (e.g., an embedding matrix computed in a positional encoding layer) with a weight matrix $W_q \in \mathbb{R}^{d \times h}$, where d is the dimension of a vector embedding, N is the number of vector embeddings in the embedding matrix, and h is the number of attention heads. Each row in the query matrix may be a query. A key matrix $K \in \mathbb{R}^{N \times h}$ may be computed by multiple an embedding matrix $X \in \mathbb{R}^{N \times d}$ (e.g., an embedding matrix computed in a positional encoding layer) with a weight matrix $W_k \in \mathbb{R}^{d \times h}$. Each row in the key matrix may be a key. A value matrix $V \in \mathbb{R}^{N \times h}$ may be computed by multiple an embedding matrix $X \in \mathbb{R}^{N \times d}$ (e.g., an embedding matrix computed in a positional encoding layer) with a weight matrix $W_v \in \mathbb{R}^{d \times h}$. Each row in the value matrix may be a value.

In some embodiments, the MHA layer 1251 may implement masked multi-head self-attention. The MHA layer 1251 may prevent positions from attending to subsequent positions. For instance, each token in the sequence may not be influenced by future tokens. This masking can ensure that the predictions of a particular position can depend on known outputs at positions before it and not depend on unknown outputs at positions after it.

In some embodiments, the MHA layer 1253 may implement a cross-attention mechanism, such as encoder-decoder cross-attention. The MHA layer 1253 may use outputs from the previous layer (i.e., the add & norm layer 1252) as queries and use outputs from the encoder block 1210 as keys and values. The cross-attention can align the encoder's input with the decoder's, empowering the decoder block 1220 to identify and emphasize the most relevant parts of the encoder's input.

An add & norm layer in the transformer model 1200, such as the add & norm layer 1242, 1244, 1252, 1254, and 1256, has an addition operation followed by a layer normalization operation. The addition operation may be an addition of the output of the preceding layer and the input of the preceding layer. The preceding layer is a layer that is arranged right before the add & norm layer. For example, the preceding layer of the add & norm layer 1242 is the MHA layer 1241. As another example, the preceding layer of the add & norm layer 1254 is the encoder-decoder attention layer 1253.

Then the layer normalization operation is applied on the result of the addition operation, which may be denoted as *LayerNorm(x + sublayer(x)*, where *LayerNorm* denotes layer normalization, *x* is the input of the preceding layer, and *sublayer(x)* denotes the output of the preceding layer. In some embodiments, the layer normalization operation may include a sequence of computations. In an example, the layer normalization operation may include a mean computation, which may be denoted as

$$\mu_{xy} = \frac{1}{Z} \times \sum_{z=1}^{Z} A_{xyz}$$

, where $A_{xyz}$ denotes a data element in the input tensor, *x* may be the positional index of the data element in one of the spatial dimensions, y may be the positional index of the data element in the other one of the spatial dimensions, z may be the positional index of the data element in the channel dimension, and $\mu_{xy}$ denotes the output of the mean computation, which may be a 2D matrix. The mean computation may be channel-wise reduction operation. The layer normalization operation may convert $\mu_{xy}$ to a 3D tensor $\mu_{xyz}$, e.g., by replicating every data element over z output points.

The layer normalization operation may also include an elementwise subtraction, which may be denoted as $D_{xyz} = A_{xyz} - \mu_{xyz}$. The layer normalization operation may further include a variance computation denoted as

$$\sigma^2_{xy} = \sum_{z=1}^{Z} D^2_{xyz}$$

and a division computation denoted as $$M_{xy} = \frac{1}{\sqrt{\frac{1}{Z} \times (\sigma^2_{xy} + \epsilon \times Z)}}$$ . $M_{xy}$ may be a 2D tensor. The layer normalization operation may also convert $M_{xy}$ to a 3D tensor $M_{xyz}$, e.g., by replicating every data element over z output points. Further, the layer normalization operation may have an element multiplication denoted as

$$A'_{xyz} = \frac{A_{xyz} - \mu_{xyz}}{\sqrt{\frac{1}{Z} \times (\sigma^2_{xy} + \epsilon)}} = (A_{xyz} - \mu_{xyz}) \times$$

$$\frac{1}{\sqrt{\frac{1}{Z} \times (\sigma^2_{xy} + \epsilon)}} = D_{xyz} \times M_{xyz}$$

. The layer normalization operation may further compute

$$A''_{xyz} = A'_{xyz} + \frac{\beta_z}{\gamma_z}$$ and $LN_{xyz} = A''_{xyz} \times \gamma_z$. $LN_{xyz}$

may be the output of the layer normalization operation.

A feed forward layer (e.g., the feed forward layer 1243 and the feed forward layer 1255) may be a position-wise fully-connected feed forward network. In an example, the feed forward layer may include two linear layers with an activation function in between. An example of the activation function is ReLU.

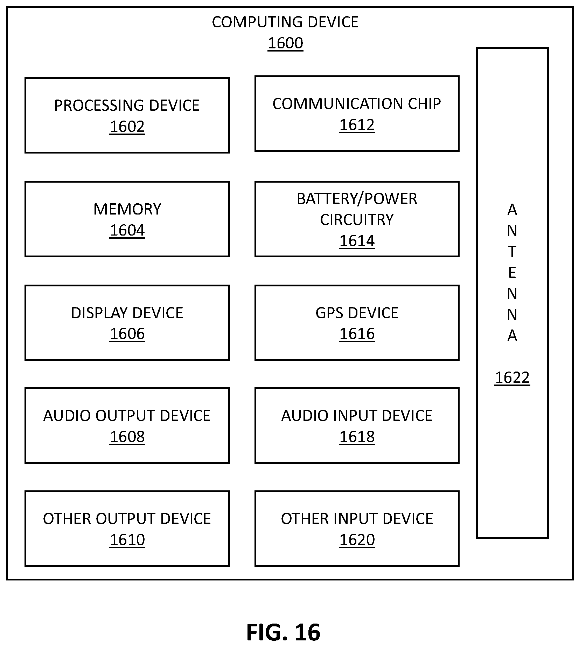

FIG. 13 is a block diagram of a DNN system 1300, in accordance with various embodiments. The whole DNN system 1300 or a part of the DNN system 1300 may be implemented in one or more computing devices, such as the computing device 1600 in FIG. 16. The DNN system 1300 can generate and execute DNNs, such as Transformer-based models, convolution-based models, and so on. As shown in FIG. 13, the DNN system 1300 includes a DNN module 1301 and a DNN accelerator 1302. In other embodiments, alternative configurations, different or additional components may be included in the DNN system 1300. For instance, the DNN system 1300 may include multiple DNN modules or multiple DNN accelerators. Further, functionality attributed to a component of the DNN system 1300 may be accomplished by a different component included in the DNN system 1300 or a different system. In some embodiments, the DNN module 1301 and DNN accelerator 1302 may include different types of processing units. In an example, the DNN module 1301 may be implemented by one or more CPUs. The DNN accelerator 1302 may also be referred to as a neural processing unit, AI accelerator, or AI processor. The DNN module 1301 and DNN accelerator 1302 may be implemented in the same chip or separate chips.

The DNN module 1301 facilitates generation and deployment of DNNs. In some embodiments, the DNN module 1301 may generate and train DNNs. For instance, the DNN module 1301 can define the layered architecture of a DNN. The DNN module 1301 can also determine the internal parameters of the DNN through a DNN training process. The DNN module 1301 may also determine one or more hyperparameters that define how the DNN is trained. An example hyperparameter is a sparsity ratio that defines the sparsity level of one or more deep learning tensors for the DNN.

The DNN module 1301 may also compress DNNs, e.g., during or after training. In some embodiments, the DNN module 1301 may prune weights in one or more layers of a DNN by changing nonzero valued weight to zeros. The DNN module 1301 may prune weights based on a target weight sparsity ratio. A weight sparsity ratio may be the ratio of the number of zero-valued weights to the total number of weights. In an example where the DNN module 1301 prunes weight during DNN training, the DNN module 1301 may prune weight of a layer to achieve a target sparsity ratio after one or more epochs. The DNN module 1301 may prevent the pruned weights from changing values during the rest of the training process. Alternatively, the DNN module 1301 may allow the pruned weights to change values so that a pruned, zero-valued weight may have a nonzero value after further training. The DNN module 1301 may prune weights of the layer again after one or more additional epochs.

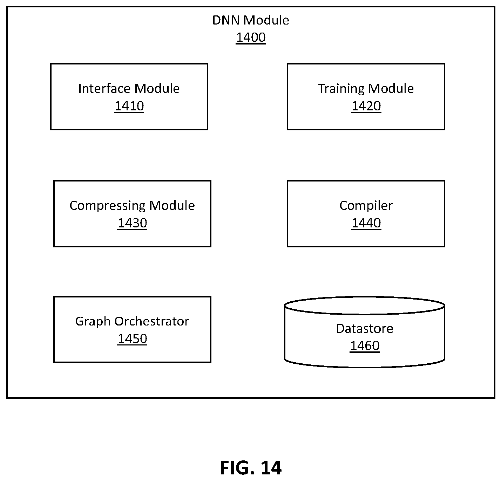

The DNN module 1301 may deploy trained, compressed, or validated DNNs for use in deep learning applications. In some embodiments, the DNN module 1301 may distribute trained, compressed, or validated DNNs to devices or systems which may use the DNNs to perform tasks (e.g., image classification, motion planning, etc.) for which the DNNs were trained. In other embodiments, the DNN module 1301 may facilitate deployment of the DNNs using the DNN accelerator 1302. For instance, the DNN module 1301 may receive data from a device or system coupled with the DNN system 1300 and input the received data (or data generated by the DNN module 1301, e.g., based on the received data) into a DNN. The DNN module 1301 may generate instructions (e.g., configuration files) that control the operation of the DNN accelerator 1302 during the DNN execution. The DNN module 1301 may receive an output of the DNN from the DNN accelerator 1302. The DNN module 1301 may transmit the output of the DNN (or a result of processing the output of the DNN by the DNN module 1301) to the device or system. In some embodiments, the DNN module 1301 may control execution processes of trained, compressed, or validated DNNs. The DNN module 1301 may function as a complier for DNNs executed by the DNN accelerator 1302. The DNN module 1301 may perform compilation of DNNs and generate compilation descriptors, based on which the DNNs may be executed. Certain aspects of the DNN module 1301 are provided below in conjunction with FIG. 14.

The DNN accelerator 1302 executes DNNs provided by the DNN module 1301. For instance, the DNN accelerator 1302 can execute a DNN by running deep learning operations in the DNN. The process of carrying out a deep learning operation is also referred to as a process of executing the deep learning operation or a process of performing the deep learning operation. The execution of the DNN may be for training the DNN or for using the DNN to perform AI tasks. As shown in FIG. 13, the DNN accelerator 1302 includes a memory 1310, a DMA engine 1320, and data processing units 1330 (individually referred to as "data processing unit 1330"). In other embodiments, alternative configurations, different or additional components may be included in the DNN accelerator 1302. For example, the DNN accelerator 1302 may include more than one memory 1310 or DMA engine 1320. As another example, the DNN accelerator 1302 may include a single data processing unit 1330. Further, functionality attributed to a component of the DNN accelerator 1302 may be accomplished by a different component included in the DNN accelerator 1302 or by a different system. A component of the DNN accelerator 1302 may be implemented in hardware, software, firmware, or some combination thereof.

The memory 1310 stores data associated with deep learning operations performed by the DNN accelerator 1302. In some embodiments, the memory 1310 may store data to be used by the data processing units 1330 for DNN execution. The memory 1310 may store weights, such as weights of convolutional layers, which are determined by training DNNs. The memory 1310 may further store inputs to DNN layers or outputs of DNN layers, such as data generated by the data processing units 1330 from performing deep learning operations in DNNs. Example deep learning operations include convolutions (also referred to as "convolutional operations"), layer normalization operations, SoftMax operations, matrix multiplication operations, pooling operations, elementwise operations, activation functions, other types of deep learning operations, or some combination thereof. The memory 1310 may be a main memory of the DNN accelerator 1302. In some embodiments, the memory 1310 includes one or more dynamic random-access memories (DRAMs).

The DMA engine 1320 facilitates data transfer between the memory 1310 and local memories of the data processing units 1330. For example, the DMA engine 1320 can read data from the memory 1310 and write data into a local memory of a data processing unit 1330. As another example, the DMA engine 1320 can read data from a local memory of a data processing unit 1330 and write data into the memory 1310. The DMA engine 1320 provides a DMA feature that allows the data processing unit 1330 to initiate data transfer between the memory 1310 and the local memories of the data processing units 1330 and to perform other operations while the data transfer is being conducted. In some embodiments, the DMA engine 1320 may read tensors from the memory 1310, modify the tensors in a way that is optimized for the data processing unit 1330 before it writes the tensors into the local memories of the data processing units 1330.

The data processing units 1330 perform deep learning operations in DNNs. For instance, a data processing unit 1330 may execute a DNN layer by running one or more deep learning operations in the DNN layer. A data processing unit 1330 may execute a layer, or a portion of a layer, at a time. In some embodiments, the operations of the DNN layers may be run by multiple data processing units 1330 in parallel. For instance, multiple data processing units 1330 may each perform a portion of a workload for a deep learning operation. Data may be shared between the data processing units 1330. A data processing unit 1330 may also be referred to as a neural processing unit, a compute block, or a compute tile.

The data processing units 1330 may be capable of running various types of deep learning operations, such as convolution, layer normalization, SoftMax operation, pooling, elementwise operation, linear operation, nonlinear operation, and so on. Deep learning operations performed by the data processing units 1330 include tensor operations, i.e., operations whose inputs are tensors or operations whose outputs are tensors. In an example, the data processing unit 1330 receives an input tensor and one or more convolutional kernels and performs a convolution with the input tensor and convolutional kernels. The result of the convolution may be an output tensor, which can be further computed, e.g., by the data processing unit 1330 or another data processing unit 1330.

In the embodiments of FIG. 13, each data processing unit 1330 includes a local memory 1340, a sparsity mode module 1350, a load module 1360, a processing engine 1370, a post-processing engine 1380, and a drain module 1390. Some or all the components of the data processing unit 1330 can be implemented on the same chip. In other embodiments, alternative configurations, different or additional components may be included in the data processing unit 1330. Further, functionality attributed to a component of the data processing unit 1330 may be accomplished by a different component included in the data processing unit 1330, a different data processing unit 1330, another component of the DNN accelerator 1302, or a different system. A component of the data processing unit 1330 may be implemented in hardware, software, firmware, or some combination thereof.

The local memory 1340 is local to the corresponding data processing unit 1330. In the embodiments of FIG. 13, the local memory 1340 is inside the data processing unit 1330. In other embodiments, the local memory 1340 may be outside the data processing unit 1330. Data in the local memory 1340 may be transferred to or from the memory 1310, e.g., through the DMA engine 1320. In some embodiments, data in the local memory 1340 may be transferred to or from the local memory of another data processing unit 1330. The local memory 1340 may store data received, used, or generated by the sparsity mode module 1350, the load module 1360, the processing engine 1370, the post-processing engine 1380, or the drain module 1390. Examples of the data may include input activations, weights, output activations, sparsity bitmaps, and so on.

In some embodiments, the local memory 1340 may store tensors to be processed by the processing engine 1370 or the post-processing engine 1380. The tensors may be input tensors of deep learning operations. The local memory 1340 may also store tensors generated by the processing engine 1370 or the post-processing engine 1380. The tensors may be output tensors of deep learning operations. The layout of data points of a tensor in the local memory 1340 may depend on the format in which the tensor is stored. In some embodiments, the local memory 1340 may store tensors in various formats, including Z-major format, X-major format, and Y-major format. For a tensor with Z-major format, the local memory 1340 may store data points having the same (x, y) coordinate contiguously. For instance, the data points having the same (x, y) coordinate may be stored at a sequence of memory addresses in the local memory 1340. For a tensor with the ZXY format or ZYX format, the local memory 1340 may store data points having the same (x, y) coordinate contiguously. For instance, the data points having the same (x, y) coordinate may be stored at a sequence of memory addresses in the local memory 1340. For a tensor with X-major format, the local memory 1340 may store data points having the same (y, z) coordinate contiguously. For a tensor with Y-major format, the local memory 1340 may store data points having the same (x, z) coordinate contiguously.

In some embodiments, the local memory 1340 may store dense tensors (e.g., dense activation tensors, dense weight tensors, etc.), sparse tensors (e.g., sparse activation tensors, sparse weight tensors, etc.), and so on. A dense tensor may be a tensor from which zero-valued elements (if any) are not removed. A dense tensor may be converted to a sparse tensor by removing one or more zero-valued elements in the dense tensor. A sparse tensor may also be referred to as a compressed tensor or packed tensor. The process of converting a dense tensor to a sparse tensor may be referred to as sparsity encoding. Sparsity encoding may also generate a sparsity tensor. Each element in the sparsity tensor may correspond to a different element in the dense tensor and indicate whether the element in the dense tensor is zero or not. The sparsity tensor may indicate positions of elements of the sparse tensor in the dense tensor. The sparsity tensor may be a sparsity bitmap, each element of which is a bit. A sparse tensor may be converted to a dense tensor through a densifying process, in which one or more zeros may be added to the sparse tensor based on the sparsity tensor.

In some embodiments, the local memory 1340 includes one or more SRAMs. The local memory 1340 may be byte-addressable, and each memory address identifies a single byte (eight bits) of storage. In some embodiments, the local memory 1340 may include memory banks. The number of data banks in the local memory 1340 may be 16, 64, 128, 1356, 512, 1024, 2048, or other numbers. A memory bank may include a plurality of storage units. In an example, a data bank may include 8, 16, 64, or a different number of storage units. A memory bank or a storage unit in a memory bank may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from the local memory 1340 in a single read cycle. In other embodiments, 16 bits can be transferred from the local memory 1340 in multiple read cycles, such as two cycles.

The sparsity mode module 1350 determines sparsity modes in which the data processing unit 1330 operates to execute DNN layers. For instance, the sparsity mode module 1350 may determine whether to accelerate a layer based on weight sparsity, activation sparsity, or both. The sparsity mode module 1350 select the sparsity mode for a layer from a group of sparsity modes that includes, for example, combined sparsity mode in which the layer is accelerated based on both weight sparsity and activation sparsity, activation sparsity mode in which the layer is accelerated based on activation sparsity but not based on weight sparsity, weight sparsity mode in which the layer is accelerated based on weight sparsity but not based on activation sparsity, and a dense mode in which the layer is not accelerated based on sparsity. In some embodiments (e.g., embodiments where a layer is executed by multiple data processing units 1330), the sparsity mode module 1350 may determine the sparsity mode for all the data processing units 1330 that executes the layer. In some embodiments, the sparsity mode module 1350 may receive configuration parameters from the DNN module 1301. A configuration parameter may correspond to a layer and indicate whether to accelerate the layer based on weight sparsity. The sparsity mode module 1350 may determine the sparsity mode of the layer based on the configuration parameter.

The load module 1360 loads data from the local memory 1340 to the processing engine 1370 or to the post-processing engine 1380. The load module 1360 may read tensors from the local memory 1340. The tensors may include sparse activation tensors, sparse weight tensors, activation sparsity tensors, weight sparsity tensors, and so on. In some embodiments, the load module 1360 may load data based on the sparsity mode determined by the sparsity mode module 1350. The load module 1360 may select different data to transmit to the processing engine 1370 in different sparsity modes. For instance, the load module 1360 may transmit an activation sparsity tensor and a weight sparsity tensor of a layer to the processing engine 1370 in the combined sparsity mode, while transmit the activation sparsity tensor but not the weight sparsity tensor to the processing engine 1370 in the activation sparsity mode and transmit the weight sparsity tensor but not the activation sparsity tensor to the processing engine 1370 in the weight sparsity mode. In the dense mode, the load module 1360 does not transmit either the activation sparsity tensor or the weight sparsity tensor to the processing engine 1370.

In some embodiments, the load module 1360 may process (e.g., densify) data stored in the local memory 1340 before providing the data to the processing engine 1370. In an example, the load module 1360, while operating in the weight sparsity mode, may densify sparse activation tensors to generate dense activation tensors based on corresponding activation sparsity tensors. For instance, the load module 1360 may add one or more zeros into a sparse activation tensor based on an activation sparsity tensor associated with the sparse activation tensor to generate the dense activation tensor. The dense activation tensor includes one or more elements than the sparse activation tensor. The additional element(s) are zero-valued. The load module 1360 may identify one or more elements in the activation sparsity tensor that correspond to the zero-valued element(s), determine the position of each of the zero-valued element(s) in the dense activation tensor, and insert the zero-valued element(s) into the sparse activation tensor based on the determined positions. After the densification, the load module 1360 may transmit the dense activation tensors to the processing engine 1370. The load module 1360 may also transmit corresponding sparse weight tensors and weight sparsity tensors to the processing engine 1370. Activation sparsity tensor of the dense activation tensors may not be loaded to the processing engine 1370.

In another example, the load module 1360, while operating in the activation sparsity mode, may densify sparse weight tensors to generate dense weight tensors based on corresponding weight sparsity tensors by inserting zeros into sparse weight tensors. The densification of sparse weight tensors may be similar to the densification of sparse activation tensors described above. After the densification, the load module 1360 may transmit the dense weight tensors to the processing engine 1370. The load module 1360 may also transmit corresponding sparse activation tensors and activation sparsity tensors to the processing engine 1370. Weight sparsity tensor of the dense weight tensors may not be loaded to the processing engine 1370. In yet another example, the load module 1360, while operating in the dense mode, may densify both sparse weight tensors and sparse activation tensors. The load module 1360 may generate the input tensor and weight tensor of the layer and transmit the tensors to the processing engine 1370 for executing the layer without sparsity acceleration.

The processing engine 1370 performs operations in DNNs. The processing engine 1370 may accelerate neural network operations based on sparsity in data. In some embodiments, the processing engine 1370 may operate in a dense mode in which sparsity acceleration is not performed. The processing engine 1370 may include one or more processing cells. In some embodiments, the processing cells may be arranged in one or more rows and one or more columns in the processing engine 1370. Each processing cell may include PEs that may be arranged in an array that includes rows and columns. All the PEs in the processing engine 1370 may constitute a bigger array that includes more rows and columns.

An example PE may be or may include one or more MAC units that can perform MAC operations. In some embodiments (e.g., embodiments where the data processing unit 1330 executes a convolutional layer), a computation in an MAC unit may be an MAC operation on an activation operand and a weight operand. The activation operand may be an activation tensor that may include one or more activations in the input tensor of the convolution. Different activations may be in different input channels. The weight operand may be a weight tensor that may include one or more weights in the filter of the convolution. The values of the weights are determined through training the DNN. The weights in the weight operand may be in different input channels.

In some embodiments, an MAC unit includes one or more multipliers for performing multiplications. An MAC unit may also include one or more accumulators ("adders") for performing accumulations. A column of MAC units is referred to as an MAC column. An MAC column may be associated with one or more MAC lanes. A MAC lane is a path for loading data e.g., by the load module 1360, into an MAC column. A MAC lane may be also referred to as a data transmission lane or data loading lane. An MAC column may have multiple MAC lanes. The loading bandwidth of the MAC column is an aggregation of the loading bandwidths of all the MAC lanes associated with the MAC column. With a certain number of MAC lanes, data can be fed into the same number of independent MAC units simultaneously. In some embodiments where an MAC column has four MAC lanes for feeding activations or weights into the MAC column and each MAC lane may have a bandwidth of 16 bytes, the four MAC lanes can have a total loading bandwidth of 64 bytes.

In some embodiments, the processing engine 1370 may be capable of depthwise convolution, standard convolution, or both. In a depthwise convolution, an MAC unit may perform an MAC operation that includes a sequence of multiplications for an input operand and a weight operand. Each multiplication in the sequence (also referred to as a cycle) is a multiplication of a different activation in the input operand with a different weight in the weight operand. The activation and weight in the same cycle may correspond to the same channel. The sequence of multiplication produces a product operand that includes a sequence of products. The MAC operation may also include accumulations in which multiple product operands are accumulated to produce an output operand of the MAC unit. The processing engine 1370 may output multiple output operands at a time, each of which is generated by a different MAC unit. In a standard convolution, MAC operations may include accumulations across the channels. For instance, as opposed to generating an output operand, a MAC unit may accumulate products across different channels to generate a single output point.

In some embodiments, the processing engine 1370 may perform MAC operations in quantized deep learning operations, such as MAC operations in a quantized convolution. In some embodiments, an MAC unit in the processing engine 1370 may receive quantized activation and quantized weights and compute a quantized MAC result. The quantized MAC result may be a quantized value in an integer format and may be the output of the MAC unit. In some embodiments, the MAC unit may also include a quantization multiplier that can multiply a quantization scale with the quantized MAC result, and the output of the MAC unit may be a real value in a floating-point format. The MAC unit may include no quantization subtractors as zero-point offsetting is not needed for the MAC operations in quantized deep learning operations.

In some embodiments, the processing engine 1370 may include sparsity acceleration logic for facilitating sparsity acceleration. For instance, each processing cell in the processing engine 1370 may include one or more sparsity modules. In an example, each MAC column or each MAC row may have a corresponding sparsity module that accelerates MAC operations in the MAC column or MAC row. In some embodiments, a sparsity module accelerates computations in the processing engine 1370 based on sparsity in activations, sparsity in weights, or both. The sparsity module may include a storage unit that stores a sparsity tensor, which may be loaded to the storage unit by the load module 1360. The sparsity tensor may be an activation sparsity tensor, a weight sparsity tensor, or a combined sparsity tensor.

An activation sparsity tensor may be the sparsity tensor of an activation tensor and has the same number of elements as the activation tensor. An element in the activation sparsity tensor may indicate whether the corresponding element in the activation tensor is zero or not. For instance, a zero-valued in the activation sparsity tensor may indicate that the corresponding element in the activation tensor is zero. A one-valued in the activation sparsity tensor may indicate that the corresponding element in the activation tensor is nonzero. A weight sparsity tensor may be the sparsity tensor of a weight tensor and has the same number of elements as the weight tensor. An element in the weight sparsity tensor may indicate whether the corresponding element in the weight tensor is zero or not. For instance, a zero-valued in the weight sparsity tensor may indicate that the corresponding element in the weight tensor is zero. A one-valued in the weight sparsity tensor may indicate that the corresponding element in the weight tensor is nonzero. The sparsity module may generate a combined sparsity tensor using an activation sparsity tensor and a weight sparsity tensor. For instance, the sparsity module may multiply an element of the activation sparsity tensor with a corresponding element of the weight sparsity tensor to compute an element of the combined sparsity tensor. The positions of the three elements in their corresponding sparsity tensors may match. In some embodiments, each element in a sparsity tensor may be a bit, and the sparsity tensor may be referred to as a sparsity bitmap.

The sparsity module may use the sparsity tensor to identify activations and weights to be used in MAC operations by the MAC units. In an embodiment where the processing engine 1370 operates in the combined sparsity mode, the sparsity module may identify activations and weights that correspond to nonzero valued elements of a combined sparsity tensor. In an embodiment where the processing engine 1370 operates in the activation sparsity mode, the sparsity module may identify activations and weights that correspond to nonzero valued elements of an activation sparsity tensor. In an embodiment where the processing engine 1370 operates in the weight sparsity mode, the sparsity module may identify activations and weights that correspond to nonzero valued elements of a weight sparsity tensor. The sparsity module may be bypassed in the dense mode as no sparsity acceleration would be conducted.

The post-processing engine 1380 processes outputs of the processing engine 1370. The post-processing engine 1380 may include one or more post-processing elements. In some embodiments, the post-processing elements in the post-processing engine 1380 may be arranged in an arrange that has rows and columns. In some embodiments, the post-processing engine 1380 computes activation functions. The post-processing engine 1380 may receive outputs of the processing engine 1370 as inputs to the activation functions. In addition or alternative to activation functions, the post-processing engine 1380 may perform other types of post processing on outputs of the processing engine 1370. For instance, the post-processing engine 1380 may apply a bias on an output of the processing engine 1370. In some embodiments, the post-processing engine 1380 may be bypassed for certain neural network operations.

The drain module 1390 drains data from the processing engine 1370 or from the post-processing engine 1380. The drain module may write the data to the local memory 1340. The drained data may be tensors, such as output tensors of neural network operations. In some embodiments, the drain module 1390 may drain data on a cell level. For each processing cell, the drain module 1390 may drain outputs of PEs in the processing cell based on a row index or column index of each PE. For instance, the drain module 1390 may use a sequence of cycles to drain data from a processing cell. The drain module 1390 may drain the output of some of the PE s in each cycle. The sequence of the cycles may be configured based on a configuration parameter indicating the operation mode of the load module 1360.

In some embodiments, the drain module 1390 includes sparsity encoding logic that can convert outputs of the processing engine 1370 from a dense format to a sparse format. For instance, the drain module 1390 may be implemented with one or more sparsity encoders. A sparsity encoder converts dense data to compressed data based on sparsity in the dense data. For instance, the sparsity encoder may remove zeros in an activation tensor computed by the processing engine 1370 to convert the activation tensor to a compressed activation tensor. The sparsity encoder may also generate sparsity tensors, including activation sparsity tensors.

In some embodiments, the data drained from the processing engine 1370 may be at least part of an output tensor of a deep learning operation. The sparsity encoder may generate a compressed version of the output tensor. The sparsity encoder may identify every zero-valued activation in the output tensor and remove these activations from the output tensor to generate a compressed activation tensor (aka "sparse activation tensor"). The sparsity encoder may also generate one or more sparsity tensors for the output tensor. A sparsity tensor may correspond to a portion of the output tensor. The sparsity tensor may include sparsity elements (e.g., bits), each of which corresponds to a different activation in the vector and indicates whether the corresponding activation is zeroed or not.

The drain module 1390 may write the compressed activation tensor and the one or more sparsity tensors into the local memory 1340. The sparse activation tensor and the one or more sparsity tensors may be further loaded to the memory 1310, e.g., through the DMA engine 1320. Additionally or alternatively, the sparse activation tensor and the one or more sparsity tensors may be loaded by the load module 1360 to the processing engine 1370 for further computation, e.g., for performing a deep learning operation in the next layer.

FIG. 14 is a block diagram of a DNN module 1400, in accordance with various embodiments. The DNN module 1400 may be an embodiment of the DNN module 1301 in FIG. 13. As shown in FIG. 14, the DNN module 1400 includes an interface module 1410, a training module 1420, a compressing module 1430, a compiler 1440, a graph orchestrator 1450, and a datastore 1460. In other embodiments, alternative configurations, different or additional components may be included in the DNN module 1400. Further, functionality attributed to a component of the DNN module 1400 may be accomplished by a different component included in the DNN module 1400 or a different module or system.

The interface module 1410 facilitates communications of the DNN module 1400 with other modules or systems. For example, the interface module 1410 establishes communications between the DNN module 1400 with an external database to receive data that can be used to train DNNs or input into DNNs to perform tasks. As another example, the interface module 1410 supports the DNN module 1400 to distribute DNNs to other systems, e.g., computing devices configured to apply DNNs to perform tasks. The interface module 1410 may receive inference requests from users of transformer models.

The training module 1420 trains DNNs by using a training dataset. The training module 1420 forms the training dataset. In an example where the training module 1420 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the training module 1420 to validate performance of a trained DNN. The portion of the training dataset not including the tuning subset and the validation subset may be used to train the DNN.

The training module 1420 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 5, 10, 50, 100, 500, 1000, or even larger.

The training module 1420 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully-connected layers, normalization layers, SoftMax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between two convolution layers. A fully-connected layer involves weights, biases, and neurons. It connects neurons in one layer to neurons in another layer. It is used to classify images between different categories by training.

In the process of defining the architecture of the DNN, the training module 1420 also adds an activation function to a hidden layer or the output layer. An activation function of a layer transforms the weighted sum of the input of the layer to an output of the layer. The activation function may be, for example, a ReLU activation function, a tangent activation function, or other types of activation functions.

After the training module 1420 defines the architecture of the DNN, the training module 1420 inputs a training dataset into the DNN. The training dataset includes a plurality of training samples. An example of a training sample includes an object in an image and a ground-truth label of the object. The training module 1420 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 1420 uses a cost function to minimize the error.

The training module 1420 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1420 finishes the predetermined number of epochs, the training module 1420 may stop updating the parameters in the DNN. The DNN having the updated parameters is referred to as a trained DNN.

The training module 1420 may also verify accuracy of trained or compressed DNNs. In some embodiments, the training module 1420 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the training module 1420 may determine an accuracy score measuring the precision, recall, or a combination of precision and recall of the DNN. The training module 1420 may use the following metrics to determine the accuracy score: Precision = TP / (TP + FP) and Recall = TP / (TP + FN), where precision may be how many the DNN correctly predicted (TP or true positives) out of the total it predicted (TP + FP or false positives), and recall may be how many the DNN correctly predicted (TP) out of the total number of objects that did have the property in question (TP + FN or false negatives). The F-score (F-score = 2 * PR / (P + R)) unifies precision and recall into a single measure.

The training module 1420 may compare the accuracy score with a threshold score. In an example where the training module 1420 determines that the accuracy score of the DNN is less than the threshold score, the training module 1420 may re-train the DNN. In one embodiment, the training module 1420 may iteratively re-train the DNN until the occurrence of a stopping condition, such as the accuracy measurement indication that the DNN may be sufficiently accurate, or a number of training rounds having taken place.

The compressing module 1430 compresses DNNs. For instance, the compressing module 1430 may add pruning operations to DNN layers to reduce computational complexity or memory usage. A pruning operation may prune weight tensors of a DNN layer by changing one or more nonzero valued weights of the layer to zeros. The modification may be done before, during, or after training. Weights may be pruned during training, during inference, or a combination of both. The compressing module 1430 may determine a sparsity ratio for a DNN layer. The sparsity ratio may be a ratio of the number of zero-valued weight to the total number of weights in the layer. The compressing module 1430 may perform the pruning operation till the sparsity ratio of the DNN layer meets a target sparsity ration, such as 10%, 20%, 30%, 140%, 50%, and so on.

In some embodiments, the compressing module 1430 may select one or more layers in a DNN and modify each selected layer with a pruning operation. For instance, the compressing module 1430 may select computationally complex layers, such as layers with large filters. For a pruning operation of a layer or of a type of layer, the compressing module 1430 may determine a weight threshold that would not cause a loss of the accuracy of the DNN to exceed an accuracy loss constraint. A pruning operation may modify weights having absolute values above the weight threshold to zeros and leave the other weights unchanged. The weight pruning can reduce memory storage as zero-valued weights may not be stored. Also, the number of operations in the layer can be reduced as computations on zero-valued weights can be skipped without impacting the output of the layer. In some embodiments, the compressing module 1430 may also measure energy saving, final DNN accuracy, or layer-wise sparsity caused by pruning operations.

After compressing a DNN, the compressing module 1430 may fine tune the DNN, e.g., through a retraining process. The compressing module 1430 may fine tunes DNNs after weights are pruned. In some embodiments, the fine-tuning process is a retraining or further training process. For instance, after weights in a DNN are pruned, the compressing module 1430 may further train the DNN by inputting a training dataset into the DNN. The values of the unpruned weights in the DNN may be modified based on outputs of the DNN and ground-truth labels of the training samples in the training dataset. In some embodiments, the values of the pruned weights (i.e., zero) are not changed during the fine-tuning process. For instance, the compressing module 1430 may place a mask over a pruned weight block and the mask can prevent values in the pruned weight blocks from being changed during the fine-tuning process. In other embodiments, the values of all weights, including the pruned weights, may be changed during the fine-tuning process. After one or more cycles of retraining and weight changing by the compressing module 1430, the compressing module 1430 may perform a new pruning process, e.g., by selecting weight blocks and pruning the selected weight blocks. In some embodiments, the weight pruning process may be repeated multiple times before the fine-tuning process is done. In some embodiments, the number of epochs in the fine-tuning process may be different from the number of epochs in the training process in which the pre-pruning values of the weights are determined. For instance, the fine-tuning process may have less epochs than the training process. In an example, the number of epochs in the fine-tuning process may be relatively small, such as 2, 3, 14, 5, and so on.

The compiler 1440 compiles information of DNNs to executable instructions that can be executed, e.g., by the DNN accelerator 1702, to carry out neural network operations in DNNs. Examples of DNNs include the CNN 1100 in FIG. 11 and the transformer model 1200 in FIG. 12. The compiler 1440 may generate executable DNNs, e.g., DNNs that can be at least partially executed by the DNN accelerator 1701. In some embodiments, the compiler 1405 may generate a graph representing a DNN. The graph may include nodes and edges. A node may represent a specific neural network operation in the DNN. An edge may connect two nodes and represent a connection between the two corresponding neural network operations. In an example, an edge may encode a tensor that flows from one of the neural network operations to the other neural network operation. The tensor may be an output tensor of the first neural network operation and an input tensor of the second neural network operation. The edge may encode one or more attributes of the tensor, such as size, shape, storage format, and so on. Additionally or alternatively, one or more attributes of the tensor may be indicated by the configuration descriptor. The compiler 1440 may use the graph to generate instructions (e.g., compilation descriptors). The instructions would be executed by components of the DNN accelerator 1702 to execute the DNN.

In some embodiments, the compiler 1440 may decompose a DNN into a plurality of workloads that can be executed by compute elements, e.g., components in the DNN accelerator 1702. A compute element may be a data processing unit in the DNN accelerator 1702, the processing engine 1370, one or more processing elements in the processing engine 1370, the post-processing engine 1380, or one or more post-processing elements in the post-processing engine 1380. In some embodiments, the compiler 1440 may modify graphs of DNNs by inserting barriers into the graphs. The barriers may be managed by the graph orchestrator 1450. An example of the graph orchestrator 1450 is the graph orchestrator block 300 in FIG. 3. Functionality attributed to the compiler 1440 may be accomplished by the graph orchestrator 1450, or vice versa.

The datastore 1460 stores data received, generated, used, or otherwise associated with the DNN module 1400. For example, the datastore 1460 stores the datasets used by the training module 1420 or compressing module 1430. The datastore 1460 may also store data generated by the training module 1420 or compressing module 1430, such as the hyperparameters for training DNNs, internal parameters of trained DNNs (e.g., weights, etc.), data for sparsity acceleration (e.g., sparsity bitmap, etc.), and so on. The datastore 1460 may store configuration parameters, compilation descriptors, or other data generated by the compiler 1440. The datastore 1460 may store messages, barrier tracking information, or other data received, used or generated by the graph orchestrator 1450. The datastore 1460 may include one or more memories. In the embodiment of FIG. 14, the datastore 1460 is a component of the DNN module 1400. In other embodiments, the datastore 1460 may be external to the DNN module 1400 and communicate with the DNN module 1400 through a network.

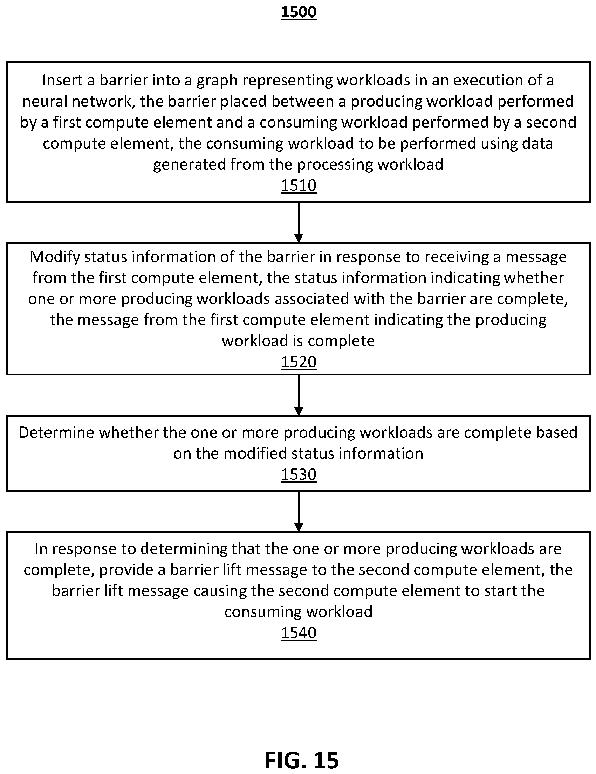

FIG. 15 is a flowchart of a method for executing a DNN, in accordance with various embodiments. Examples of the DNN may include CNNs (e.g., the CNN 1100), transformer models (e.g., the transformer model 1200), or other types of DNNs. The method 1500 may be performed by the DNN module 1400 in FIG. 14. Although the method 1500 is described with reference to the flowchart illustrated in FIG. 15, many other methods for executing DNNs may alternatively be used. For example, the order of execution of the steps in FIG. 15 may be changed. As another example, some of the steps may be changed, eliminated, or combined.

The DNN module 1400 inserts 1510 a barrier into a graph representing workloads in an execution of a neural network. The barrier is placed between a producing workload performed by a first compute element and a consuming workload performed by a second compute element. The consuming workload is to be performed using data generated from the producing workload. In some embodiments, the graph comprises nodes and edges. A node represents a workload. An edge represents a data flow between two or more workloads. The barrier is placed on one or more edges in the graph.

The DNN module 1400 modifies 1520 status information of the barrier in response to receiving a message from the first compute element, the status information indicating whether one or more producing workloads associated with the barrier are complete, the message from the first compute element indicating the producing workload is complete. In some embodiments, the DNN module 1400 generates a barrier tracking table for a group of barriers that includes the barrier. The status information of the barrier is included in the barrier tracking table. The DNN module 1400 assigns different barrier IDs to the barriers. The DNN module 1400 associates a producer count of each respective barrier with a barrier ID of the respective barrier.

The DNN module 1400 determines 1530 whether the one or more producing workloads are complete based on the modified status information. In some embodiments, the status information of the barrier includes a producer count indicating a number of producers having incomplete producing workloads. The DNN module 1400 determines whether the one or more producing workloads are complete by determining whether the producer count of the barrier is zero.

The DNN module 1400 provides 1540 a barrier lift message to the second compute element, in response to determining that the one or more producing workloads are complete. The barrier lift message causes the second compute element to start the consuming workload. In some embodiments, the DNN module 1400 provides, through a master interface, the barrier lift message to a plurality of compute elements that includes the second compute element. In some embodiments, the DNN module 1400 has the barrier prevent the second compute element from starting the consuming workload in response to determining that at least one producing workload associated with the barrier is incomplete.

In some embodiments, the DNN module 1400 further modifies the status information of the barrier in response to receiving a message from the second compute element. The status information further indicates whether one or more consuming workloads associated with the barrier are complete. The message from the second compute element indicates the consuming workload is complete. The DNN module 1400 determines whether the one or more consuming workloads are complete based on the further modified status information. The DNN module 1400 provides a barrier clear message to the first compute element or the second compute element in response to determining that the one or more consuming workloads are complete. The barrier clear message indicates that the barrier is cleared.

FIG. 16 is a block diagram of an example computing device 1600, in accordance with various embodiments. In some embodiments, the computing device 1600 can be used as at least part of the DNN system 1300. A number of components are illustrated in FIG. 15 as included in the computing device 1600, but any one or more of these components may be omitted or duplicated, as suitable for the application. In some embodiments, some or all of the components included in the computing device 1600 may be attached to one or more motherboards. In some embodiments, some or all of these components are fabricated onto a single system on a chip (SoC) die. Additionally, in various embodiments, the computing device 1600 may not include one or more of the components illustrated in FIG. 15, but the computing device 1600 may include interface circuitry for coupling to the one or more components. For example, the computing device 1600 may not include a display device 1606, but may include display device interface circuitry (e.g., a connector and driver circuitry) to which a display device 1606 may be coupled. In another set of examples, the computing device 1600 may not include an audio input device 1618 or an audio output device 1608 but may include audio input or output device interface circuitry (e.g., connectors and supporting circuitry) to which an audio input device 1618 or audio output device 1608 may be coupled.

The computing device 1600 may include a processing device 1602 (e.g., one or more processing devices). The processing device 1602 processes electronic data from registers and/or memory to transform that electronic data into other electronic data that may be stored in registers and/or memory. The computing device 1600 may include a memory 1604, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1604 may include memory that shares a die with the processing device 1602. In some embodiments, the memory 1604 includes one or more non-transitory computer-readable media storing instructions executable to perform operations (e.g., the method 1500 described in conjunction with FIG. 15) or some operations performed by one or more components of the DNN system 1300 (e.g., the DNN module 1301, the graph orchestrator 1450, etc.). The instructions stored in the one or more non-transitory computer-readable media may be executed by the processing device 1602.

In some embodiments, the computing device 1600 may include a communication chip 1612 (e.g., one or more communication chips). For example, the communication chip 1612 may be configured for managing wireless communications for the transfer of data to and from the computing device 1600. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1612 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1612 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1612 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1612 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1612 may operate in accordance with other wireless protocols in other embodiments. The computing device 1600 may include an antenna 1622 to facilitate wireless communications and/or to receive other wireless communications (such as AM or FM radio transmissions).

In some embodiments, the communication chip 1612 may manage wired communications, such as electrical, optical, or any other suitable communication protocols (e.g., the Ethernet). As noted above, the communication chip 1612 may include multiple communication chips. For instance, a first communication chip 1612 may be dedicated to shorter-range wireless communications such as Wi-Fi or Bluetooth, and a second communication chip 1612 may be dedicated to longer-range wireless communications such as global positioning system (GPS), EDGE, GPRS, CDMA, WiMAX, LTE, EV-DO, or others. In some embodiments, a first communication chip 1612 may be dedicated to wireless communications, and a second communication chip 1612 may be dedicated to wired communications.

The computing device 1600 may include battery/power circuitry 1614. The battery/power circuitry 1614 may include one or more energy storage devices (e.g., batteries or capacitors) and/or circuitry for coupling components of the computing device 1600 to an energy source separate from the computing device 1600 (e.g., AC line power).

The computing device 1600 may include a display device 1606 (or corresponding interface circuitry, as discussed above). The display device 1606 may include any visual indicators, such as a heads-up display, a computer monitor, a projector, a touchscreen display, a liquid crystal display (LCD), a light-emitting diode display, or a flat panel display, for example.

The computing device 1600 may include an audio output device 1608 (or corresponding interface circuitry, as discussed above). The audio output device 1608 may include any device that generates an audible indicator, such as speakers, headsets, or earbuds, for example.

The computing device 1600 may include an audio input device 1618 (or corresponding interface circuitry, as discussed above). The audio input device 1618 may include any device that generates a signal representative of a sound, such as microphones, microphone arrays, or digital instruments (e.g., instruments having a musical instrument digital interface (MIDI) output).

The computing device 1600 may include a GPS device 1616 (or corresponding interface circuitry, as discussed above). The GPS device 1616 may be in communication with a satellite-based system and may receive a location of the computing device 1600, as known in the art.

The computing device 1600 may include another output device 1610 (or corresponding interface circuitry, as discussed above). Examples of the other output device 1610 may include an audio codec, a video codec, a printer, a wired or wireless transmitter for providing information to other devices, or an additional storage device.

The computing device 1600 may include another input device 1620 (or corresponding interface circuitry, as discussed above). Examples of the other input device 1620 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1600 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1600 may be any other electronic device that processes data.

The following paragraphs provide various examples of the embodiments disclosed herein.

Example 1 provides a method, including inserting a barrier into a graph representing workloads in an execution of a neural network, the barrier placed between a producing workload performed by a first compute element and a consuming workload performed by a second compute element, the consuming workload to be performed using data generated from the producing workload; modifying status information of the barrier in response to receiving a message from the first compute element, the status information indicating whether one or more producing workloads associated with the barrier are complete, the message from the first compute element indicating the producing workload is complete; determining whether the one or more producing workloads are complete based on the modified status information; and in response to determining that the one or more producing workloads are complete, providing a barrier lift message to the second compute element, the barrier lift message causing the second compute element to start the consuming workload.

Example 2 provides the method of example 1, in which the graph includes nodes and edges, a node represents a workload, an edge represents a data flow between two or more workloads, and the barrier is placed on one or more edges in the graph.

Example 3 provides the method of example 1 or 2, in which determining whether the one or more producing workloads are complete includes determining whether a producer count in the status information of the barrier is zero, the producer count indicating a number of producers having incomplete producing workloads.

Example 4 provides the method of any one of examples 1-3, in which providing the barrier lift message includes providing, through a master interface, the barrier lift message to a plurality of compute elements that includes the second compute element.

Example 5 provides the method of any one of examples 1-4, further including further modifying the status information of the barrier in response to receiving a message from the second compute element, the status information further indicating whether one or more consuming workloads associated with the barrier are complete, the message from the second compute element indicating the consuming workload is complete; and determining whether the one or more consuming workloads are complete based on the further modified status information; and in response to determining that the one or more consuming workloads are complete, providing a barrier clear message to the first compute element or the second compute element, the barrier clear message indicating that the barrier is cleared.

Example 6 provides the method of any one of examples 1-5, further including generating a barrier tracking table for a group of barriers that includes the barrier, the status information of the barrier included in the barrier tracking table; assigning different barrier IDs to the barriers; and associating a producer count or a consumer count of each respective barrier with a barrier ID of the respective barrier.

Example 7 provides the method of any one of examples 1-6, further including in response to determining that at least one producing workload associated with the barrier is incomplete, having the barrier prevent the second compute element from starting the consuming workload.

Example 8 provides one or more non-transitory computer-readable media storing instructions executable to perform operations, the operations including inserting a barrier into a graph representing workloads in an execution of a neural network, the barrier placed between a producing workload performed by a first compute element and a consuming workload performed by a second compute element, the consuming workload to be performed using data generated from the producing workload; modifying status information of the barrier in response to receiving a message from the first compute element, the status information indicating whether one or more producing workloads associated with the barrier are complete, the message from the first compute element indicating the producing workload is complete; determining whether the one or more producing workloads are complete based on the modified status information; and in response to determining that the one or more producing workloads are complete, providing a barrier lift message to the second compute element, the barrier lift message causing the second compute element to start the consuming workload.

Example 9 provides the one or more non-transitory computer-readable media of example 8, in which the graph includes nodes and edges, a node represents a workload, an edge represents a data flow between two or more workloads, and the barrier is placed on one or more edges in the graph.

Example 10 provides the one or more non-transitory computer-readable media of example 8 or 9, in which determining whether the one or more producing workloads are complete includes determining whether a producer count in the status information of the barrier is zero, the producer count indicating a number of producers having incomplete producing workloads.

Example 11 provides the one or more non-transitory computer-readable media of any one of examples 8-10, in which providing the barrier lift message includes providing, through a master interface, the barrier lift message to a plurality of compute elements that includes the second compute element.

Example 12 provides the one or more non-transitory computer-readable media of any one of examples 8-11, in which the operations further include further modifying the status information of the barrier in response to receiving a message from the second compute element, the status information further indicating whether one or more consuming workloads associated with the barrier are complete, the message from the second compute element indicating the consuming workload is complete; and determining whether the one or more consuming workloads are complete based on the further modified status information; and in response to determining that the one or more consuming workloads are complete, providing a barrier clear message to the first compute element or the second compute element, the barrier clear message indicating that the barrier is cleared.

Example 13 provides the one or more non-transitory computer-readable media of any one of examples 8-12, in which the operations further include generating a barrier tracking table for a group of barriers that includes the barrier, the status information of the barrier included in the barrier tracking table; assigning different barrier IDs to the barriers; and associating a producer count or a consumer count of each respective barrier with a barrier ID of the respective barrier.

Example 14 provides the one or more non-transitory computer-readable media of any one of examples 8-13, in which the operations further include in response to determining that at least one producing workload associated with the barrier is incomplete, having the barrier prevent the second compute element from starting the consuming workload.

Example 15 provides an apparatus, including a computer processor for executing computer program instructions; and a non-transitory computer-readable memory storing computer program instructions executable by the computer processor to perform operations including inserting a barrier into a graph representing workloads in an execution of a neural network, the barrier placed between a producing workload performed by a first compute element and a consuming workload performed by a second compute element, the consuming workload to be performed using data generated from the producing workload, modifying status information of the barrier in response to receiving a message from the first compute element, the status information indicating whether one or more producing workloads associated with the barrier are complete, the message from the first compute element indicating the producing workload is complete, determining whether the one or more producing workloads are complete based on the modified status information, and in response to determining that the one or more producing workloads are complete, providing a barrier lift message to the second compute element, the barrier lift message causing the second compute element to start the consuming workload.

Example 16 provides the apparatus of example 15, in which the graph includes nodes and edges, a node represents a workload, an edge represents a data flow between two or more workloads, and the barrier is placed on one or more edges in the graph.

Example 17 provides the apparatus of example 15 or 16, in which determining whether the one or more producing workloads are complete includes determining whether a producer count in the status information of the barrier is zero, the producer count indicating a number of producers having incomplete producing workloads.

Example 18 provides the apparatus of any one of examples 15-17, in which providing the barrier lift message includes providing, through a master interface, the barrier lift message to a plurality of compute elements that includes the second compute element.

Example 19 provides the apparatus of any one of examples 15-18, in which the operations further include further modifying the status information of the barrier in response to receiving a message from the second compute element, the status information further indicating whether one or more consuming workloads associated with the barrier are complete, the message from the second compute element indicating the consuming workload is complete; and determining whether the one or more consuming workloads are complete based on the further modified status information; and in response to determining that the one or more consuming workloads are complete, providing a barrier clear message to the first compute element or the second compute element, the barrier clear message indicating that the barrier is cleared.

Example 20 provides the apparatus of any one of examples 15-19, in which the operations further include generating a barrier tracking table for a group of barriers that includes the barrier, the status information of the barrier included in the barrier tracking table; assigning different barrier IDs to the barriers; and associating a producer count or a consumer count of each respective barrier with a barrier ID of the respective barrier. the feature map using the learnable binary matrix.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A method, comprising:

    inserting a barrier into a graph representing workloads in an execution of a neural network, the barrier placed between a producing workload performed by a first compute element and a consuming workload performed by a second compute element, the consuming workload to be performed using data generated from the producing workload;
    modifying status information of the barrier in response to receiving a message from the first compute element, the status information indicating whether one or more producing workloads associated with the barrier are complete, the message from the first compute element indicating the producing workload is complete;
    determining whether the one or more producing workloads are complete based on the modified status information; and
    in response to determining that the one or more producing workloads are complete, providing a barrier lift message to the second compute element, the barrier lift message causing the second compute element to start the consuming workload.

2. The method of claim 1, wherein the graph comprises nodes and edges, a node represents a workload, an edge represents a data flow between two or more workloads, and the barrier is placed on one or more edges in the graph.

3. The method of claim 1 or 2, wherein:

    determining whether the one or more producing workloads are complete comprises: determining whether a producer count in the status information of the barrier is zero, the producer count indicating a number of producers having incomplete producing workloads; or
    providing the barrier lift message comprises: providing, through a master interface, the barrier lift message to a plurality of compute elements that includes the second compute element.

4. The method of any one of claims 1-3, further comprising:

    further modifying the status information of the barrier in response to receiving a message from the second compute element, the status information further indicating whether one or more consuming workloads associated with the barrier are complete, the message from the second compute element indicating the consuming workload is complete;
    determining whether the one or more consuming workloads are complete based on the further modified status information; and
    in response to determining that the one or more consuming workloads are complete, providing a barrier clear message to the first compute element or the second compute element, the barrier clear message indicating that the barrier is cleared.

5. The method of any one of claims 1-4, further comprising:

    generating a barrier tracking table for a group of barriers that includes the barrier, the status information of the barrier included in the barrier tracking table, assigning different barrier IDs to the barriers, and associating a producer count or a consumer count of each respective barrier with a barrier ID of the respective barrier; or
    in response to determining that at least one producing workload associated with the barrier is incomplete, having the barrier prevent the second compute element from starting the consuming workload.

6. One or more non-transitory computer-readable media storing instructions executable to perform operations, the operations comprising:

inserting a barrier into a graph representing workloads in an execution of a neural network, the barrier placed between a producing workload performed by a first compute element and a consuming workload performed by a second compute element, the consuming workload to be performed using data generated from the producing workload;

modifying status information of the barrier in response to receiving a message from the first compute element, the status information indicating whether one or more producing workloads associated with the barrier are complete, the message from the first compute element indicating the producing workload is complete;

determining whether the one or more producing workloads are complete based on the modified status information; and

in response to determining that the one or more producing workloads are complete, providing a barrier lift message to the second compute element, the barrier lift message causing the second compute element to start the consuming workload.

7. The one or more non-transitory computer-readable media of claim 6, wherein the graph comprises nodes and edges, a node represents a workload, an edge represents a data flow between two or more workloads, and the barrier is placed on one or more edges in the graph.

8. The one or more non-transitory computer-readable media of claim 6 or 7, wherein:

determining whether the one or more producing workloads are complete comprises: determining whether a producer count in the status information of the barrier is zero, the producer count indicating a number of producers having incomplete producing workloads; or

providing the barrier lift message comprises: providing, through a master interface, the barrier lift message to a plurality of compute elements that includes the second compute element.

9. The one or more non-transitory computer-readable media of any one of claims 6-8, wherein the operations further comprise:

further modifying the status information of the barrier in response to receiving a message from the second compute element, the status information further indicating whether one or more consuming workloads associated with the barrier are complete, the message from the second compute element indicating the consuming workload is complete;

determining whether the one or more consuming workloads are complete based on the further modified status information; and

in response to determining that the one or more consuming workloads are complete, providing a barrier clear message to the first compute element or the second compute element, the barrier clear message indicating that the barrier is cleared.

10. The one or more non-transitory computer-readable media of any one of claims 6-9, wherein the operations further comprise:

generating a barrier tracking table for a group of barriers that includes the barrier, the status information of the barrier included in the barrier tracking table, assigning different barrier IDs to the barriers, and associating a producer count or a consumer count of each respective barrier with a barrier ID of the respective barrier; or

in response to determining that at least one producing workload associated with the barrier is incomplete, having the barrier prevent the second compute element from starting the consuming workload.

11. An apparatus, comprising:

a computer processor for executing computer program instructions; and

a non-transitory computer-readable memory storing computer program instructions executable by the computer processor to perform operations comprising:

inserting a barrier into a graph representing workloads in an execution of a neural network, the barrier placed between a producing workload performed by a first compute element and a consuming workload performed by a second compute element, the consuming workload to be performed using data generated from the producing workload,

modifying status information of the barrier in response to receiving a message from the first compute element, the status information indicating whether one or more producing workloads associated with the barrier are complete, the message from the first compute element indicating the producing workload is complete,

determining whether the one or more producing workloads are complete based on the modified status information, and

in response to determining that the one or more producing workloads are complete, providing a barrier lift message to the second compute element, the barrier lift message causing the second compute element to start the consuming workload.

12. The apparatus of claim 11, wherein the graph comprises nodes and edges, a node represents a workload, an edge represents a data flow between two or more workloads, and the barrier is placed on one or more edges in the graph.

13. The apparatus of claim 11 or 12, wherein:

determining whether the one or more producing workloads are complete comprises: determining whether a producer count in the status information of the barrier is zero, the producer count indicating a number of producers having incomplete producing workloads; or
providing the barrier lift message comprises: providing, through a master interface, the barrier lift message to a plurality of compute elements that includes the second compute element.

14. The apparatus of any one of claims 11-13, wherein the operations further comprise:

further modifying the status information of the barrier in response to receiving a message from the second compute element, the status information further indicating whether one or more consuming workloads associated with the barrier are complete, the message from the second compute element indicating the consuming workload is complete;
determining whether the one or more consuming workloads are complete based on the further modified status information; and
in response to determining that the one or more consuming workloads are complete, providing a barrier clear message to the first compute element or the second compute element, the barrier clear message indicating that the barrier is cleared.

15. The apparatus of any one of claims 11-14, wherein the operations further comprise:

generating a barrier tracking table for a group of barriers that includes the barrier, the status information of the barrier included in the barrier tracking table;
assigning different barrier IDs to the barriers; and
associating a producer count or a consumer count of each respective barrier with a barrier ID of the respective barrier.

FIG. 1

FIG. 2

FIG. 3

400

| Barrier ID | Producers | | | | | | | | | Consumers | | | | | | | | | Producer Count | Consumer Count |
|---|---|---|---|---|---|---|---|---|---|---|---|---|---|---|---|---|---|---|---|---|
| | R0 | R1 | R2 | Y0 | Y1 | Y2 | G0 | G1 | G2 | R0 | R1 | R2 | Y0 | Y1 | Y2 | G0 | G1 | G2 | | |
| Barrier 0 | 1 | | | 1 | | | | | | | 1 | | | 1 | | | | | 2 | 2 |
| Barrier 1 | 1 | | | | | | 1 | | | | | 1 | | | | | | | 2 | 1 |
| Barrier 2 | | 1 | | | 1 | | | | | | | | | | | | 1 | | 2 | 1 |
| Barrier 3 | | 1 | 1 | | | | | | | | | | | | | | | 1 | 2 | 1 |
| Barrier 4 | | | 1 | | | | | | | 1 | | | | | | | | | 1 | 1 |
| Barrier 5 | | | | | | | | 1 | | | | | | | 1 | | | | 1 | 1 |
| Barrier 6 | 1 | | | | | | | | 1 | | | | 1 | | 1 | | | | 2 | 2 |

# FIG. 4A

**FIG. 4B**

| Null Barrier | <u>510A</u> --→ | <u>500A</u> | <u>510B</u> --→ | Barrier <u>210A</u> |

| Barrier <u>210E</u> | <u>510C</u> --→ | <u>500B</u> | <u>510D</u> --→ | Barrier <u>210G</u> |

**FIG. 5**

Start Producer FSM
610

↓

Message received
620

↓ Yes

Message indicates producer decrement? 630 — No →

↓ Yes

Modify producer count for barrier 640

↓

Producer count = 0? 650 — No →

↓ Yes

Generate barrier lift message 660

## FIG. 6

```
┌─────────────────────────┐
│   Start Consumer FSM     │
│          710             │
└─────────────────────────┘
             │
             ▼
┌─────────────────────────┐ ◄──────────────┐
│    Message received      │                │
│          720             │                │
└─────────────────────────┘                │
             │ Yes                          │
             ▼                              │
         ╱─────────╲                        │
        ╱  Message   ╲          No          │
       ╱   indicates   ╲ ────────────────►  │
       ╲   consumer    ╱                    │
        ╲ decrement 730╱                    │
         ╲───────────╱                      │
             │ Yes                          │
             ▼                              │
┌─────────────────────────┐                │
│    Modify consumer       │                │
│   count for barrier 740  │                │
└─────────────────────────┘                │
             │                              │
             ▼                              │
         ╱─────────╲                        │
        ╱           ╲          No           │
       ╱ Consumer count =╲ ──────────────►  │
       ╲     0 750      ╱                    │
        ╲             ╱                      │
         ╲───────────╱                       │
             │ Yes                           │
             ▼                               │
┌─────────────────────────┐                 │
│  Generate barrier clear  │ ────────────────┘
│      message 760         │
└─────────────────────────┘
```

**FIG. 7**

```
        ┌─────────────────────┐
        │ Start message monitor│
        │        FSM          │
        │        810          │
        └─────────────────────┘
                  │
                  ▼
        ┌─────────────────────┐
   ┌───▶│  Message received    │
   │    │        820          │
   │    └─────────────────────┘
   │              │ Yes
   │              ▼
   │         ◇─────────────◇          No
   │        ╱ Message indicates ╲──────────┐
   │        ╲ barrier lift 830  ╱          │
   │         ◇─────────────◇               │
   │              │ Yes                    │
   │              ▼                        ▼
   │    ┌─────────────────┐      ┌─────────────────┐
   │    │ Lift barrier 840 │      │ Block associated │
   │    └─────────────────┘      │   barrier 850   │
   │              │              └─────────────────┘
   │              │                       │
   └──────────────┤                       │
                  ▼                       ▼
```

**FIG. 8**

Start Consumer FSM 910

↓

Fetch workload pointer 920

↓

Read workload descriptor
BARR_CON_NUM_ID=ID0 930

↓

Consumer barrier
BARR_CON_NUM_ID
lifted? 940 — No

Barrier ID +1
945

Yes
↓

Consumer barrier
BARR_CON_NUM_ID
the last barrier? 950 — No

Yes
↓

Execute workload BARR_PROD_NUM_ID=ID0 960

↓

Generate producer decrement for
BARR_PROD_NUM_ID 970

Barrier ID +1
985

↓

Producer barrier
BARR_PROD_NUM_ID
the last producer
barrier? 980

Yes — No

**FIG. 9**

**FIG. 10**

CNN 1100

1140　1150　1163　1160

1183

1193

1180　1190

Convolutional Layer 1110

Pooling Layer 1120

Fully-connected Layer 1130

FIG. 11

**FIG. 12**

**DNN System 1300**

DNN Module 1301

DNN Accelerator
1302

Memory
1310

DMA Engine
1320

Data Processing Unit 1330

Local Memory
1340

Sparsity Mode
Module 1350

Load Module
1360

Processing Engine
1370

Post-processing
Engine 1380

Drain Module
1390

**FIG. 13**

DNN Module
1400

Interface Module
1410

Training Module
1420

Compressing Module
1430

Compiler
1440

Graph Orchestrator
1450

Datastore
1460

**FIG. 14**

1500

Insert a barrier into a graph representing workloads in an execution of a neural network, the barrier placed between a producing workload performed by a first compute element and a consuming workload performed by a second compute element, the consuming workload to be performed using data generated from the processing workload
1510

Modify status information of the barrier in response to receiving a message from the first compute element, the status information indicating whether one or more producing workloads associated with the barrier are complete, the message from the first compute element indicating the producing workload is complete
1520

Determine whether the one or more producing workloads are complete based on the modified status information
1530

In response to determining that the one or more producing workloads are complete, provide a barrier lift message to the second compute element, the barrier lift message causing the second compute element to start the consuming workload
1540

FIG. 15

COMPUTING DEVICE
1600

PROCESSING DEVICE
1602

COMMUNICATION CHIP
1612

MEMORY
1604

BATTERY/POWER
CIRCUITRY
1614

DISPLAY DEVICE
1606

GPS DEVICE
1616

AUDIO OUTPUT DEVICE
1608

AUDIO INPUT DEVICE
1618

OTHER OUTPUT DEVICE
1610

OTHER INPUT DEVICE
1620

ANTENNA

1622

**FIG. 16**

Europäisches
Patentamt

European
Patent Office

Office européen
des brevets

# EUROPEAN SEARCH REPORT

**Application Number**

EP 25 17 8581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/272515 A1 (BRADY JOHN [IE]) 27 August 2020 (2020-08-27) * abstract * * paragraphs [0013], [0017], [0028] - [0038]; figures 14A-14C,15 * ----- | 1-15 | INV. G06F9/50 |
| A | CN 113 298 691 A (INTEL CORP) 24 August 2021 (2021-08-24) * abstract * * paragraph [0259] - paragraph [0278] * ----- | 1-15 | |
| A | US 2021/382717 A1 (JIANG HONG [US] ET AL) 9 December 2021 (2021-12-09) * Section: Hierarchical Thread Scheduling * ----- | 1-15 | |

| | |
|---|---|
| | TECHNICAL FIELDS SEARCHED (IPC) |
| | G06F |

The present search report has been drawn up for all claims

| Place of search | Date of completion of the search | Examiner |
|---|---|---|
| The Hague | 27 October 2025 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8581

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2025

| Patent document cited in search report | | Publication date | Patent family member(s) | | Publication date |
|---|---|---|---|---|---|
| US 2020272515 | A1 | 27-08-2020 | NONE | | |
| CN 113298691 | A | 24-08-2021 | CN | 113298691 A | 24-08-2021 |
| | | | EP | 3869337 A1 | 25-08-2021 |
| | | | US | 2021263785 A1 | 26-08-2021 |
| US 2021382717 | A1 | 09-12-2021 | CN | 113760495 A | 07-12-2021 |
| | | | EP | 3920029 A1 | 08-12-2021 |
| | | | US | 2021382717 A1 | 09-12-2021 |

EPO FORM P0459

For more details about this annex : see Official Journal of the European Patent Office, No. 12/82